# EUROPEAN PATENT SPECIFICATION

(11) **EP 2 861 031 B1**
(45) Date of publication and mention of the grant of the patent: **09.01.2019**
(21) Application number: 12878364.4
(22) Date of filing: 08.06.2012
(51) Int. Cl.: H04W 48/12, H04W 8/24, H04W 84/12

(54) **FAST INITIAL LINK SETUP COMMUNICATION DEVICE AND METHOD**
VORRICHTUNG UND VERFAHREN ZUR KOMMUNIKATION MIT SCHNELLEM ERSTVERBINDUNGSAUFBAU
DISPOSITIF ET PROCÉDÉ DE COMMUNICATION D'UNE CONFIGURATION DE LIAISON INITIALE RAPIDE

(43) Date of publication of application: 15.04.2015
(73) Proprietor: Yulong Computer Telecommunication Technologies (Shenzhen) Co., Ltd., Guangdong 518057 (CN)
(72) Inventor: DONG, Xiandong, Shenzhen Guangdong 518057 (CN)
(74) Representative: Michalski Hüttermann & Partner Patentanwälte mbB
(86) International application number: PCT/CN2012/076676
(87) International publication number: WO 2013/181852

(56) References cited:
- CN-A- 1 581 823
- CN-A- 1 604 548
- US-A1- 2012 051 312
- JARKKO KNECKT (NOKIA): "Active Scanning ; 11-11-1619-03-00ai-active-scanning", IEEE SA MENTOR; 11-11-1619-03-00AI-ACTIVE-SCANNING, IEEE-SA MENTOR, PISCATAWAY, NJ USA, vol. 802.11ai, no. 3, 19 January 2012 (2012-01-19), pages 1-15, XP068038006, [retrieved on 2012-01-19]
- CHENGYAN FENG(ZTE CORPORATION): "Text for Fast Security Setup ; 11-12-0015-00-00ai-text-for-fast-security- setup", IEEE SA MENTOR; 11-12-0015-00-00AI-TEXT-FOR-FAST-SECURITY- SETUP, IEEE-SA MENTOR, PISCATAWAY, NJ USA, vol. 802.11ai, 12 January 2012 (2012-01-12), pages 1-7, XP068038052, [retrieved on 2012-01-12]
- TOM SIEP (CSR): "proposed-specification-framework-for-TGai ; 11-12-0151-07-00ai-proposed-specification- framework-for-tgai", IEEE DRAFT; 11-12-0151-07-00AI-PROPOSED-SPECIFICATION- FRAMEWORK-FOR-TGAI, IEEE-SA MENTOR, PISCATAWAY, NJ USA, vol. 802.11ai, no. 7, 26 March 2012 (2012-03-26), pages 1-9, XP017672752, [retrieved on 2012-03-26]
- GEORGE CHERIAN (QUALCOMM): "Text for FILS authentication ; 11-12-0123-00-00ai-text-for-fils-authentic ation", IEEE SA MENTOR; 11-12-0123-00-00AI-TEXT-FOR-FILS-AUTHENTIC ATION, IEEE-SA MENTOR, PISCATAWAY, NJ USA, vol. 802.11ai, 18 January 2012 (2012-01-18), pages 1-17, XP068038233, [retrieved on 2012-01-18]
- "IEEE Standard for Information technology--Telecommunications and information exchange between systems Local and metropolitan area networks--Specific requirements Part 11: Wireless LAN Medium Access Control (MAC) and Physical Layer (PHY) Specifications;IEEE Std 802.11-2012 (Revision of IEEE Std 802.1", IEEE STD 802.11-2012, IEEE COMPUTER SOCIETY, NEW YORK, USA, 29 March 2012 (2012-03-29), pages 1-2793, XP068050195, ISBN: 978-0-7381-7211-8
- LG ELECTRONICS: 'FILS Association' IEEE 802.11-11/1169RL 17 January 2012, pages 6 - 10, XP068037246

## Description

### Field of the Invention

The present invention relates to the technical field of communications, and in particular, relates to a fast initial link setup communication device and a fast initial link setup communication method.

### Background of the Invention

A new project team 11ai was set up in IEEE (Institute of Electrical and Electronics Engineers) 802.11. The main aim of this team lies in that in a wireless local area network, after a large number of STAs (stations) enter the coverage of an AP (Access Point), the STAs can simultaneously set up fast initial link with the AP. This project team proposes the requirement that 100 STAs all set up initial link with the AP within one second.

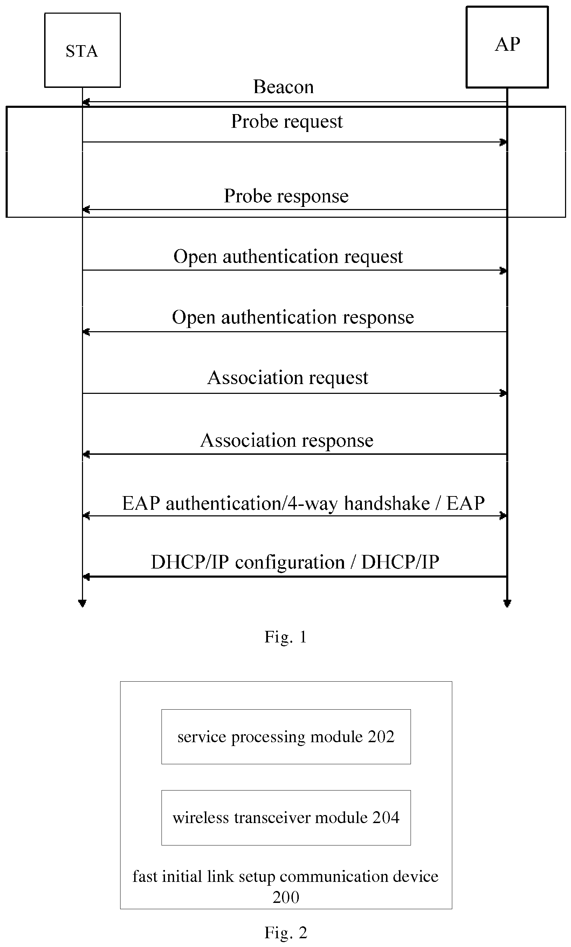

According to the existing process of initial link between STAs and an AP, there are totally 13 steps, specifically as shown in Fig. 1. The existing initial link setup mode cannot meet the requirement of 11ai, so it must be changed. Different from the existing AP, an AP supporting the FILS (Fast Initial Link Setup) function can set up initial link with the STA supporting the FILS function in a new faster mode.

This leads to a problem that if the STA not supporting the FILS function enters a WLAN (Wireless Local Area Network) supporting the FILS function and the initial link setup process is carried out in an FILS function mode, the STA not supporting the FILS function cannot analyze a link instruction sent out by an AP in the WLAN supporting the FILS function, and vice versa, an STA supporting the FILS function cannot set up fast initial link with an AP not supporting the FILS function in an FILS mode.

Jarkko Kneckt, NOKIA, et al. describe in document "Active Scanning enabling FILS", document IEEE 802.11-11/1619r3 a method for making active scanning faster, more precise and with less overhead.

Chengyan Feng of ZTE Corp. describes in document "Text for Fast Security Setup", IEEE SA MENTOR, 2012, vol. 802.11ai, pages 1 - 7, a method for active scanning.

Tom Siep (CSR) describes in document "proposed-specification-framework-for-TGai", IEEE DRAFT; 2012, vol. 802.1lai, no. 7, pages 1 - 9, a further method for active scanning.

George Cherian of Qualcomm describes in document "Text for FILS authentication", IEEE-SA MENTOR, 2012, vol. 802.11ai, pages 1 - 17, another method for active scanning. US 2012/051312 A1 describes a method of a transmission station (STA) transmitting a frame in a Wide Local Area Network (WLAN) system.

"IEEE Standard for Information technology--Telecommunications and information exchange between systems Local and metropolitan area networks--Specific requirements Part 11: Wireless LAN Medium Access Control (MAC) and Physical Layer (PHY) Specifications; IEEE Std 802.11-2012 (Revision of IEEE Std 802.1", IEEE STD 802.11-2012, IEEE COMPUTER SOCIETY, NEW YORK, USA, ISBN 978-0-7381-7211-8, pages 1 - 2793, describes a further method for active scanning.

Therefore, a new technical solution is needed for solving the problem of network incompatibility that an STA cannot be linked with an AP in a WLAN when the STA not supporting the FILS function enters the WLAN supporting the FILS function and when the STA supporting the FILS function enters the WLAN not supporting the FILS function.

### Summary of the Invention

The technical problem to be solved by the present invention is providing a new technical solution for solving the problem of network incompatibility so that an STA can set up initial link with an AP when the STA not supporting the FILS function enters a WLAN supporting the FILS function and when the STA supporting the FILS function enters a WLAN not supporting the FILS function.

The invention is defined by the features of the independent claims. Preferred embodiments are defined by the features of the dependent claims.

In view of this, the present invention provides a fast initial link setup communication device, including: a service processing module for generating a beacon frame, wherein a physical frame header of the beacon frame includes a first identifier information bit and/or a physical layer convergence protocol service data unit includes a second identifier information bit, and the value of the first identifier information bit being a first value and/or the value of the second identifier information bit being a second value express that the service processing module supports the fast initial link setup function, and for transmitting the beacon frame via a wireless transceiver module; and/or for receiving an initial link setup first message via the wireless transceiver module, wherein the value of the first identifier information bit in the physical frame header of the initial link setup first message being the first value and/or the value of the second identifier information bit in the physical layer convergence protocol service data unit being the second value express that a terminal supports the fast initial link setup function; and the wireless transceiver module for exchanging data with externals to the fast initial link setup communication device. In this technical solution, the fast initial link setup communication device may be a router, a mobile phone, a flat computer, a notebook computer or the like and may be used as an AP, the service processing module is equivalent to a chip for processing wireless local area network services, and the wireless transceiver module is equivalent to an antenna for transceiving wireless local area network signals; and the AP may previously notify whether an STA supports the FILS function by using the Beacon frame or judge whether the STA supports the FILS function according to the initial link setup first message of the STA, so that both the AP and the STA can set up initial link with each other in an appropriate mode.

In the above technical solution, preferably, the PSDU (PLCP service data unit, physical layer convergence protocol service data unit) includes an MPDU (MAC protocol data unit, media access control protocol data unit), the MPDU is an MAC (media access control) frame, and the media access control frame includes a media access control frame header and a media access control frame body. In this technical solution, as long as the initial link setup first message includes the PSDU, the FILS function may be identified by using the frame body part of the MPDU in the PSDU.

In the above technical solution, preferably, the first identifier information bit includes one or more bits in a signal domain of the physical frame header of the beacon frame and/or the initial link setup first message; and the second identifier information bit includes one or more bits in the media access control frame of the beacon frame and/or the initial link setup first message. In this technical solution, notification and discovery of the FILS function may be fast realized for the STA and the AP by using the SIG (signal) domain in the physical frame header of the Beacon frame or the initial link setup first message and the MAC (Media Access Control) frame in the PSDU.

In the above technical solution, preferably, the second identifier information bit includes one or more bits in a capability information domain of the media access control frame body in the beacon frame and/or the initial link setup first message.

In this technical solution, specifically exemplified is the capability information domain for setting the identifier information bit. Those skilled in the art should understand that based on the format change of the Beacon frame or the initial link setup first message, other bits may also be selected as the identifier information bit.

In the above technical solution, preferably, the initial link setup first message includes a probe request frame and/or an association request frame. In this technical solution, clearly exemplified are the probe request frame also having the structure in the PSDU form and the association request frame or the combination of both. Those skilled in the art should understand that more messages with similar structure may be used as the initial link setup first message.

In this technical solution, preferably, the physical frame header of the beacon frame and/or the initial link setup first message include the first identifier information bit and/or the physical layer convergence protocol service data unit includes the second identifier information bit, the value of the first identifier information bit being a second value and/or the value of the second identifier information bit being a first value express that the service processing module and/or the terminal support the traditional initial link setup function. In this technical solution, the identifier information bits may also be utilized to clearly indicate whether the AP and the STA support the initial link setup function of the traditional mode, and the traditional mode mentioned herein is equivalent to the steps shown in Fig. 1.

In the above technical solution, preferably, when both the service processing module and the terminal support the fast initial link setup function, the service processing module and the terminal set up initial link in a specified mode of fast initial link setup; and/or when both the service processing module and the terminal do not support the fast initial link setup function, the service processing module and the terminal set up initial link in the traditional initial link setup mode; and/or when the service processing module supports the fast initial link setup function and the terminal does not support the fast initial link setup function, the service processing module and the terminal set up initial link in the traditional initial link setup mode; and/or when the service processing module does not support the fast initial link setup function and the terminal supports the fast initial link setup function, the service processing module and the terminal set up initial link in the traditional initial link setup mode. In this technical solution, it can be ensured that after whether the STA supports the FILS function is learnt, the AP may select an appropriate mode to set up initial link with the STA in conjunction with whether the AP supports the FILS function, and the traditional mode mentioned herein is equivalent to the steps shown in Fig. 1.

The present invention further provides a fast initial link setup communication method, including: generating a beacon frame, wherein a physical frame header of the beacon frame includes a first identifier information bit and/or a physical layer convergence protocol service data unit includes a second identifier information bit, and the value of the first identifier information bit being a first value and/or the value of the second identifier information bit being a second value express that an access point supports the fast initial link setup function; transmitting the beacon frame; and/or receiving an initial link setup first message, wherein the value of the first identifier information bit in the physical frame header of the initial link setup first message being the first value and/or the value of the second identifier information bit in the physical layer convergence protocol service data unit being the second value express that a terminal supports the fast initial link setup function. In this technical solution, the AP may previously notify whether an STA supports the FILS function by using the Beacon frame or judge whether the STA supports the FILS function according to the initial link setup first message of the STA, so that both the AP and the STA can set up initial link with the each other in an appropriate mode.

In the above technical solution, preferably, the PSDU (PLCP service data unit, physical layer convergence protocol service data unit) includes an MPDU (MAC protocol data unit, media access control protocol data unit), the MPDU is a media access control frame, and the media access control frame includes a media access control frame header and a media access control frame body. In this technical solution, as long as the initial link setup first message includes the PSDU, the FILS function may be identified by using the frame body part of the MPDU in the PSDU.

In the above technical solution, preferably, the first identifier information bit includes one or more bits in a signal domain of the physical frame header of the beacon frame and/or the initial link setup first message; and the second identifier information bit includes one or more bits in the media access control frame of the beacon frame and/or the initial link setup first message. In this technical solution, notification and discovery of the FILS function may be fast realized for the STA and the AP by using the SIG (signal) domain in the physical frame header of the Beacon frame or the initial link setup first message and the MAC (media access control) frame in the PSDU.

In the above technical solution, preferably, the second identifier information bit includes one or more bits in a capability information domain of the media access control frame body in the beacon frame and/or the initial link setup first message.

In this technical solution, specifically exemplified is the capability information domain for setting the identifier information bit. Those skilled in the art should understand that based on the format change of the Beacon frame or the initial link setup first message, other bits may also be selected as the identifier information bit.

In the above technical solution, preferably, the initial link setup first message includes a probe request frame and/or an association request frame. In this technical solution, clearly exemplified are the probe request frame also having the structure in the PSDU form and the association request frame or the combination of both. Those skilled in the art should understand that more messages with the similar structure may be used as the initial link setup first message.

In the above technical solution, preferably, the physical frame header of the beacon frame and/or the initial link setup first message include the first identifier information bit and/or the physical layer convergence protocol service data unit includes the second identifier information bit, the value of the first identifier information bit being a second value and/or the value of the second identifier information bit being a first value express that the access point and/or the terminal support the traditional initial link setup function. In this technical solution, the identifier information bits may also be utilized to clearly indicate whether the AP and the STA support the initial link setup function of the traditional mode, and the traditional mode mentioned herein is equivalent to the steps shown in Fig. 1.

In the above technical solution, preferably, the method further includes: when both the access point and the terminal support the fast initial link setup function, the access point and the terminal set up initial link in a specified mode of fast initial link setup; and/or when both the access point and the terminal do not support the fast initial link setup function, the access point and the terminal set up initial link in the traditional initial link setup mode; and/or when the access point supports the fast initial link setup function and the terminal does not support the fast initial link setup function, the access point and the terminal set up initial link in the traditional initial link setup mode; and/or when the access point does not support the fast initial link setup function and the terminal supports the fast initial link setup function, the access point and the terminal set up initial link in the traditional initial link setup mode. In this technical solution, it can be ensured that after whether the STA supports the FILS function is learnt, the AP may select an appropriate mode to set up initial link with the STA in conjunction with whether the AP supports the FILS function, and the traditional mode mentioned herein is equivalent to the steps shown in Fig. 1.

The present invention further provides a fast initial link setup communication device, including: a service processing module for generating an initial link setup first message, wherein a physical frame header of the initial link setup first message includes a first identifier information bit and/or a physical layer convergence protocol service data unit includes a second identifier information bit, and the value of the first identifier information bit being a first value and/or the value of the second identifier information bit being a second value express that the service processing module supports the fast initial link setup function, and for transmitting the initial link setup first message via a wireless transceiver module; and/or for receiving a beacon frame via the wireless transceiver module, wherein the value of the first identifier information bit in the physical frame header of the beacon frame being the first value and/or the value of the second identifier information bit in the physical layer convergence protocol service data unit being the second value express that an access point supports the fast initial link setup function; and the wireless transceiver module for exchanging data with externals to the fast initial link setup communication device.

In this technical solution, the fast initial link setup communication device may be a mobile phone, a flat computer, a notebook computer or the like and may be used as an STA, the service processing module is equivalent to a chip for processing wireless local area network services, and the wireless transceiver module is equivalent to an antenna for transceiving wireless local area network signals; and the STA may previously notify whether the STA supports the FILS function by using the initial link setup first message or judge whether the AP supports the FILS function according to the Beacon frame of the AP, so that both the AP and the STA can set up initial link with the each other in an appropriate mode.

In the above technical solution, preferably, the PSDU (PLCP service data unit, physical layer convergence protocol service data unit) includes an MPDU (MAC protocol data unit, media access control protocol data unit), the MPDU is a media access control frame, and the media access control frame includes a media access control frame header and a media access control frame body. In this technical solution, as long as the initial link setup first message includes the PSDU, the FILS function may be identified by using the frame body part of the MPDU in the PSDU.

In the above technical solution, preferably, the first identifier information bit includes one or more bits in a signal domain of the physical frame header of the beacon frame and/or the initial link setup first message; and the second identifier information bit includes one or more bits in the media access control frame of the beacon frame and/or the initial link setup first message. In this technical solution, notification and discovery of the FILS function may be fast realized for the STA and the AP by using the initial link setup first message or the SIG (signal) domain in the physical frame header of the Beacon frame and the MAC (media access control) frame in the PSDU.

In the above technical solution, preferably, the second identifier information bit includes one or more bits in a capability information domain of the media access control frame body in the beacon frame and/or the initial link setup first message.

In this technical solution, specifically exemplified is the capability information domain for setting the identifier information bit. Those skilled in the art should understand that based on the format change of the Beacon frame or the initial link setup first message, other bits may also be selected as the identifier information bit.

In the above technical solution, preferably, the initial link setup first message includes a probe request frame and/or an association request frame. In this technical solution, clearly exemplified are the probe request frame also having the structure in the PSDU form and the association request frame or the combination of both. Those skilled in the art should understand that more messages with the similar structure may be used as the initial link setup first message.

In the above technical solution, preferably, the physical frame header of the beacon frame and/or the initial link setup first message include the first identifier information bit and/or the physical layer convergence protocol service data unit includes the second identifier information bit, the value of the first identifier information bit being a second value and/or the value of the second identifier information bit being a first value express that the service processing module and/or the access point support the traditional initial link setup function. In this technical solution, the identifier information bits may also be utilized to clearly indicate whether the AP and the STA support the initial link setup function of the traditional mode, and the traditional mode mentioned herein is equivalent to the steps shown in Fig. 1.

In the above technical solution, preferably, when both the service processing module and the access point support the fast initial link setup function, the service processing module and the access point set up initial link in a specified mode of fast initial link setup; and/or when both the service processing module and the access point do not support the fast initial link setup function, the service processing module and the access point set up initial link in the traditional initial link setup mode; and/or when the service processing module supports the fast initial link setup function and the access point does not support the fast initial link setup function, the service processing module and the access point set up initial link in the traditional initial link setup mode; and/or when the service processing module does not support the fast initial link setup function and the access point supports the fast initial link setup function, the service processing module and the access point set up initial link in the traditional initial link setup mode. In this technical solution, it can be ensured that after whether the STA supports the FILS function is learnt, the AP may select an appropriate mode to set up initial link with the STA in conjunction with whether the AP supports the FILS function, and the traditional mode mentioned herein is equivalent to the steps shown in Fig. 1.

The present invention further provides a fast initial link setup communication method, including: generating an initial link setup first message, wherein a physical frame header of the initial link setup first message includes a first identifier information bit and/or a physical layer convergence protocol service data unit includes a second identifier information bit, and the value of the first identifier information bit being a first value and/or the value of the second identifier information bit being a second value express that a terminal supports the fast initial link setup function; transmitting the initial link setup first message; and/or receiving a beacon frame, wherein the value of the first identifier information bit in the physical frame header of the beacon frame being the first value and/or the value of the second identifier information bit in the physical layer convergence protocol service data unit being the second value express that an access point supports the fast initial link setup function. In this technical solution, an STA may previously notify whether the STA supports the FILS function by using the initial link setup first message or judge whether an AP supports the FILS function according to the Beacon frame of the AP, so that both the AP and the STA can set up initial link with the each other in an appropriate mode.

In the above technical solution, preferably, the PSDU (PLCP service data unit, physical layer convergence protocol service data unit) includes an MPDU (MAC protocol data unit, media access control protocol data unit), the MPDU is a media access control frame, and the media access control frame includes a media access control frame header and a media access control frame body. In this technical solution, as long as the initial link setup first message includes the PSDU, the FILS function may be identified by using the frame body part of the MPDU in the PSDU.

In the above technical solution, preferably, the first identifier information bit includes one or more bits in a signal domain of the physical frame header of the beacon frame and/or the initial link setup first message; and the second identifier information bit includes one or more bits in the media access control frame of the beacon frame and/or the initial link setup first message. In this technical solution, notification and discovery of the FILS function may be fast realized for the STA and the AP by using the SIG domain in the physical frame header of the initial link setup first message or the Beacon frame and the MAC (media access control) frame in the PSDU.

In the above technical solution, preferably, the second identifier information bit includes one or more bits in a capability information domain of the media access control frame body in the beacon frame and/or the initial link setup first message.

In this technical solution, specifically exemplified is the capability information domain for setting the identifier information bit. Those skilled in the art should understand that based on the format change of the Beacon frame or the initial link setup first message, other bits may also be selected as the identifier information bit.

In the above technical solution, preferably, the initial link setup first message includes a probe request frame and/or an association request frame. In this technical solution, clearly exemplified are the probe request frame also having the structure in the PSDU form and the association request frame or the combination of both. Those skilled in the art should understand that more messages with the similar structure may be used as the initial link setup first message.

In the above technical solution, preferably, the physical frame header of the beacon frame and/or the initial link setup first message include the first identifier information bit and/or the physical layer convergence protocol service data unit includes the second identifier information bit, the value of the first identifier information bit being a second value and/or the value of the second identifier information bit being a first value express that the terminal and/or the access point support the traditional initial link setup function. In this technical solution, the identifier information bits may also be utilized to clearly indicate whether the AP and the STA support the initial link setup function of the traditional mode, and the traditional mode mentioned herein is equivalent to the steps shown in Fig. 1.

In the above technical solution, preferably, further including: when both the terminal and the access point support the fast initial link setup function, the terminal and the access point set up initial link in a specified mode of fast initial link setup; and/or when both the terminal and the access point do not support the fast initial link setup function, the terminal and the access point set up initial link in the traditional initial link setup mode; and/or when the terminal supports the fast initial link setup function and the access point does not support the fast initial link setup function, the terminal and the access point set up initial link in the traditional initial link setup mode; and/or when the terminal does not support the fast initial link setup function and the access point supports the fast initial link setup function, the terminal and the access point set up initial link in the traditional initial link setup mode. In this technical solution, it can be ensured that after whether the STA supports the FILS function is learnt, the AP may select an appropriate mode to set up initial link with the STA in conjunction with whether the AP supports the FILS function, and the traditional mode mentioned herein is equivalent to the steps shown in Fig. 1.

Through the above technical solutions, the fast initial link setup communication method and the fast initial link setup communication device can be implemented, and the problem of incompatibility that initial link cannot be mutually set up when an STA not supporting the FILS function enters a WLAN supporting the FILS function and when an STA supporting the FILS function enters a WLAN not supporting the FILS function can be solved.

### Brief Description of the Drawings

Fig. 1 is a schematic diagram of initial link setup between a terminal and an access point in a traditional initial link setup mode according to the prior art;
Fig. 2 is a block diagram of a fast initial link setup communication device according to an embodiment of the present invention;
Figs. 3A to 3C are flow diagrams of a fast initial link setup communication method according to an embodiment of the present invention;
Fig. 4 is a block diagram of a fast initial link setup communication device according to an embodiment of the present invention;
Figs. 5A to 5C are flow diagrams of a fast initial link setup communication method according to an embodiment of the present invention;
Fig. 6 is a partial schematic diagram of a beacon frame according to an embodiment of the present invention;
Fig. 7 is a partial schematic diagram of a beacon frame or an initial link setup first message according to an embodiment of the present invention;
Fig. 8 is a partial schematic diagram of a beacon frame or an initial link setup first message according to an embodiment of the present invention;
Fig. 9 is a partial schematic diagram of a beacon frame or an initial link setup first message according to an embodiment of the present invention;
Fig. 10 is a working flow diagram of a fast initial link setup communication device according to an embodiment of the present invention;
Fig. 11 is a working flow diagram of a fast initial link setup communication device according to an embodiment of the present invention;
Fig. 12 is a working flow diagram of a fast initial link setup communication device according to an embodiment of the present invention;
Fig. 13 is a working flow diagram of a fast initial link setup communication device according to an embodiment of the present invention.

### Detailed Description of the Embodiments

To understand the above objects, features and advantages of the present invention more clearly, the present invention will be further described in detail below in conjunction with the accompanying drawings and specific embodiments. It needs be noted that, the embodiments of the present application and the features in the embodiments may be combined with each other without conflicts.

Many specific details will be described below for sufficiently understanding the present invention. However, the present invention may also be implemented by adopting other ways different from those described herein. Accordingly, the protection scope of the present invention is not limited by the specific embodiments disclosed below.

Fig. 2 is a block diagram of a fast initial link setup communication device according to an embodiment of the present invention.

As shown in Fig. 2, the present invention provides a fast initial link setup communication device 200, including: a service processing module 202 for generating a beacon frame, wherein a physical frame header of the beacon frame includes a first identifier information bit and/or a physical layer convergence protocol service data unit includes a second identifier information bit, and the value of the first identifier information bit being a first value and/or the value of the second identifier information bit being a second value express that the service processing module 202 supports the fast initial link setup feature, and for transmitting the beacon frame via a wireless transceiver module 204; and/or for receiving an initial link setup first message via the wireless transceiver module 204, wherein the value of the first identifier information bit in the physical frame header of the initial link setup first message being the first value and/or the value of the second identifier information bit in the physical layer convergence protocol service data unit being the second value express that a terminal supports the fast initial link setup function; and the wireless transceiver module 204 for exchanging data with externals to the fast initial link setup communication device 200. In this technical solution, the fast initial link setup communication device 200 may be a router, a mobile phone, a flat computer, a notebook computer or the like and may be used as an AP, the service processing module 202 is equivalent to a chip for processing wireless local area network services, and the wireless transceiver module 204 is equivalent to an antenna for transceiving wireless local area network signals; and the AP may previously notify whether an STA supports the FILS function by using the Beacon frame or judge whether the STA supports the FILS function according to the initial link setup first message of the STA, so that both the AP and the STA can set up initial link with the each other in an appropriate mode.

In the above technical solution, the PSDU (PLCP service data unit, physical layer convergence protocol service data unit) includes an MPDU (MAC protocol data unit, media access control protocol data unit), the MPDU is a media access control frame, and the MAC frame includes a media access control frame header and a media access control frame body. In this technical solution, as long as the initial link setup first message includes the PSDU, the FILS function may be identified by using the frame body part of the MPDU in the PSDU.

In the above technical solution, the first identifier information bit includes one or more bits in a signal domain of the physical frame header of the beacon frame and/or the initial link setup first message; and the second identifier information bit includes one or more bits in the media access control frame of the beacon frame and/or the initial link setup first message. In this technical solution, notification and discovery of the FILS function may be fast realized for the STA and the AP by using the SIG (signal) domain in the physical frame header of the Beacon frame or the initial link setup first message and the MAC (media access control) frame in the PSDU.

In the above technical solution, the second identifier information bit includes one or more bits in a capability information domain of the media access control frame body in the beacon frame and/or the initial link setup first message. In this technical solution, specifically exemplified is the capability information domain for setting the identifier information bit. Those skilled in the art should understand that based on the format change of the Beacon frame or the initial link setup first message, other bits may also be selected as the identifier information bit.

In the above technical solution, the initial link setup first message includes a probe request frame and/or an association request frame. In this technical solution, clearly exemplified are the probe request frame also having the structure in the PSDU form and the association request frame or the combination of both. Those skilled in the art should understand that more messages with the similar structure may be used as the initial link setup first message.

In this technical solution, preferably, the physical frame header of the beacon frame and/or the initial link setup first message include the first identifier information bit and/or the PSDU includes the second identifier information bit, the value of the first identifier information bit being a second value and/or the value of the second identifier information bit being a first value express that the service processing module 202 and/or the terminal support the traditional initial link setup function. In this technical solution, the identifier information bits may also be utilized to clearly indicate whether the AP and the STA support the initial link setup function of the traditional mode, and the traditional mode mentioned herein is equivalent to the steps shown in Fig. 1.

In the above technical solution, when both the service processing module 202 and the terminal support the fast initial link setup function, the service processing module 202 and the terminal set up initial link in a specified mode of fast initial link setup; and/or when both the service processing module 202 and the terminal do not support the fast initial link setup function, the service processing module 202 and the terminal set up initial link in the traditional initial link setup mode; and/or when the service processing module 202 supports the fast initial link setup function and the terminal does not support the fast initial link setup function, the service processing module 202 and the terminal set up initial link in the traditional initial link setup mode; and/or when the service processing module 202 does not support the fast initial link setup function and the terminal supports the fast initial link setup function, the service processing module 202 and the terminal set up initial link in the traditional initial link setup mode. In this technical solution, it can be ensured that after whether the STA supports the FILS function is learnt, the AP may select an appropriate mode to set up initial link with the STA in conjunction with whether the AP supports the FILS function, and the traditional mode mentioned herein is equivalent to the steps shown in Fig. 1.

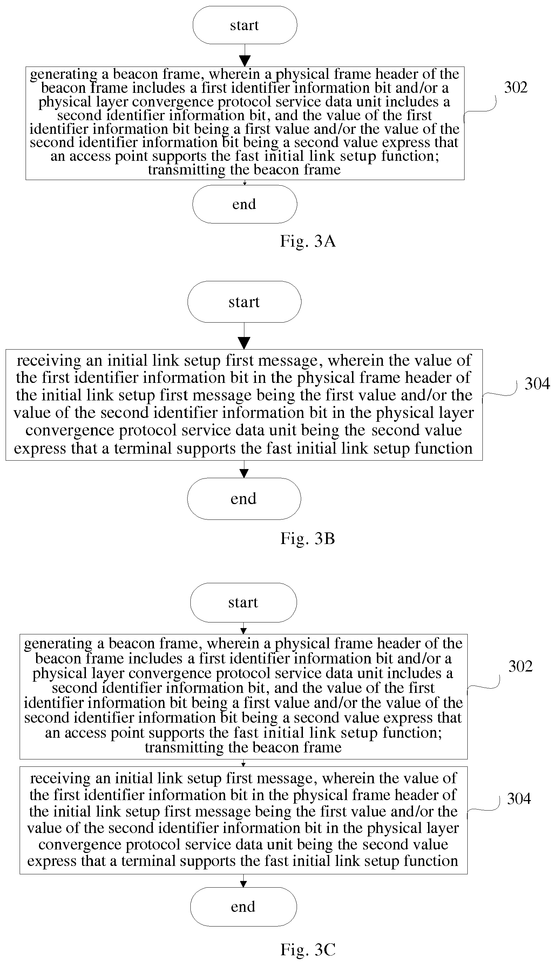

Figs. 3A to 3C show a fast initial link setup communication method according to an embodiment of the present invention.

As shown in Fig. 3A, the present invention further provides a fast initial link setup communication method, including: step 302, generating a beacon frame, wherein a physical frame header of the beacon frame includes a first identifier information bit and/or a physical layer convergence protocol service data unit includes a second identifier information bit, and the value of the first identifier information bit being a first value and/or the value of the second identifier information bit being a second value express that an access point supports the fast initial link setup function; and transmitting the beacon frame. As shown in Fig. 3B, the present invention further provides a fast initial link setup communication method, including: step 304, receiving an initial link setup first message, wherein the value of the first identifier information bit in the physical frame header of the initial link setup first message being the first value and/or the value of the second identifier information bit in the physical layer convergence protocol service data unit being the second value express that a terminal supports the fast initial link setup function. As shown in Fig. 3C, the present invention further provides a fast initial link setup communication method, including: step 302, generating a beacon frame, wherein a physical frame header of the beacon frame includes a first identifier information bit and/or a physical layer convergence protocol service data unit includes a second identifier information bit, and the value of the first identifier information bit being a first value and/or the value of the second identifier information bit being a second value express that an access point supports the fast initial link setup function; transmitting the beacon frame; and step 304, receiving the initial link setup first message, wherein the value of the first identifier information bit in the physical frame header of the initial link setup first message being the first value and/or the value of the second identifier information bit in the physical layer convergence protocol service data unit being the second value express that the terminal supports the fast initial link setup function. In this technical solution, the AP may previously notify whether an STA supports the FILS function by using the Beacon frame or judge whether the STA supports the FILS function according to the initial link setup first message of the STA, so that both the AP and the STA can set up initial link with the each other in an appropriate mode.

In the above technical solution, the PSDU (PLCP service data unit, physical layer convergence protocol service data unit) includes an MPDU (MAC protocol data unit, media access control protocol data unit), the MPDU is a media access control frame, and the MAC frame includes a media access control frame header and a media access control frame body. In this technical solution, as long as the initial link setup first message includes the PSDU, the FILS function may be identified by using the frame body part of the MPDU in the PSDU.

In the above technical solution, the first identifier information bit includes one or more bits in a signal domain of the physical frame header of the beacon frame and/or the initial link setup first message; and the second identifier information bit includes one or more bits in the media access control frame of the beacon frame and/or the initial link setup first message. In this technical solution, notification and discovery of the FILS function may be fast realized for the STA and the AP by using the SIG (signal) domain in the physical frame header of the Beacon frame or the initial link setup first message and the MAC (media access control) frame in the PSDU.

In the above technical solution, the second identifier information bit includes one or more bits in a capability information domain of the media access control frame body in the beacon frame and/or the initial link setup first message. In this technical solution, specifically exemplified is the capability information domain for setting the identifier information bit. Those skilled in the art should understand that based on the format change of the Beacon frame or the initial link setup first message, other bits may also be selected as the identifier information bit.

In the above technical solution, the initial link setup first message includes a probe request frame and/or an association request frame. In this technical solution, clearly exemplified are the probe request frame also having the structure in the PSDU form and the association request frame or the combination of both. Those skilled in the art should understand that more messages with the similar structure may be used as the initial link setup first message.

In this technical solution, preferably, the physical frame header of the beacon frame and/or the initial link setup first message include the first identifier information bit and/or the physical layer convergence protocol service data unit includes the second identifier information bit, the value of the first identifier information bit being a second value and/or the value of the second identifier information bit being a first value express that the service processing module and/or the terminal support the traditional initial link setup function. In this technical solution, the identifier information bits may also be utilized to clearly indicate whether the AP and the STA support the initial link setup function of the traditional mode, and the traditional mode mentioned herein is equivalent to the steps shown in Fig. 1.

In the above technical solution, the method further includes: when both the access point and the terminal support the fast initial link setup function, the access point and the terminal set up initial link in a specified mode of fast initial link setup; and/or when both the access point and the terminal do not support the fast initial link setup function, the access point and the terminal set up initial link in the traditional initial link setup mode; and/or when the access point supports the fast initial link setup function and the terminal does not support the fast initial link setup function, the access point and the terminal set up initial link in the traditional initial link setup mode; and/or when the access point does not support the fast initial link setup function and the terminal supports the fast initial link setup function, the access point and the terminal set up initial link in the traditional initial link setup mode. In this technical solution, it can be ensured that after whether the STA supports the FILS function is learnt, the AP may select an appropriate mode to set up initial link with the STA in conjunction with whether the AP supports the FILS function, and the traditional mode mentioned herein is equivalent to the steps shown in Fig. 1.

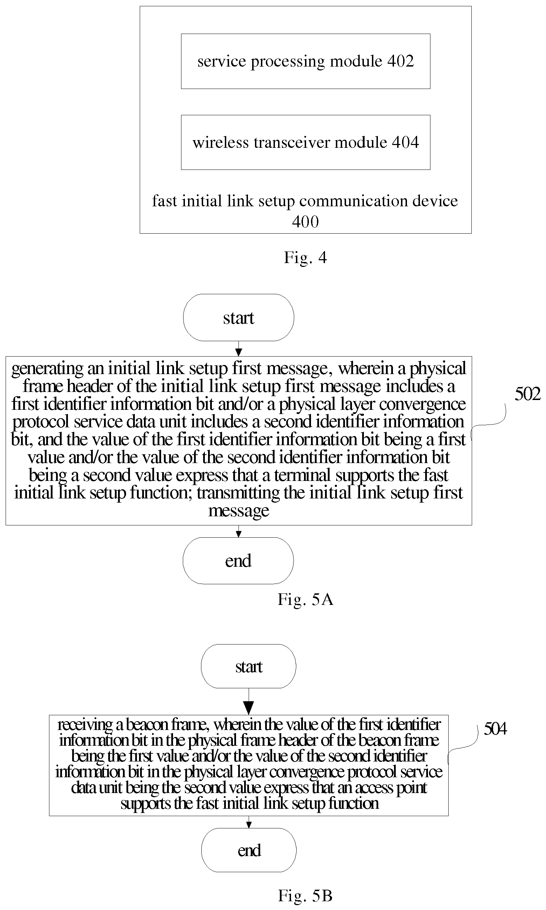

Fig. 4 is a block diagram of a fast initial link setup communication device according to an embodiment of the present invention.

As shown in Fig. 4, the present invention further provides a fast initial link setup communication device 400, including: a service processing module 402 for generating an initial link setup first message, wherein a physical frame header of the initial link setup first message includes a first identifier information bit and/or a physical layer convergence protocol service data unit includes a second identifier information bit, and the value of the first identifier information bit being a first value and/or the value of the second identifier information bit being a second value express that the service processing module 402 supports the fast initial link setup function, and for transmitting the initial link setup first message via a wireless transceiver module 404; and/or for receiving a beacon frame via the wireless transceiver module 404, wherein the value of the first identifier information bit in the physical frame header of the beacon frame being the first value and/or the value of the second identifier information bit in the physical layer convergence protocol service data unit being the second value express that an access point supports the fast initial link setup function; and the wireless transceiver module 404 for exchanging data with externals to the fast initial link setup communication device 400. In this technical solution, the fast initial link setup communication device 400 may be a mobile phone, a flat computer, a notebook computer or the like and may be used as an STA, the service processing module 402 is equivalent to a chip for processing wireless local area network services, and the wireless transceiver module 404 is equivalent to an antenna for transceiving wireless local area network signals; and the STA may previously notify whether the STA supports the FILS function by using the initial link setup first message or judge whether the AP supports the FILS function according to the Beacon frame of the AP, so that both the AP and the STA can set up initial link with the each other in an appropriate mode.

In the above technical solution, the PSDU (PLCP service data unit, physical layer convergence protocol service data unit) includes an MPDU (MAC protocol data unit, media access control protocol data unit), the MPDU is a media access control frame, and the MAC frame includes a media access control frame header and a media access control frame body. In this technical solution, as long as the initial link setup first message includes the PSDU, the FILS function may be identified by using the frame body part of the MPDU in the PSDU.

In the above technical solution, the first identifier information bit includes one or more bits in a signal domain of the physical frame header of the beacon frame and/or the initial link setup first message; and the second identifier information bit includes one or more bits in the media access control frame of the beacon frame and/or the initial link setup first message. In this technical solution, notification and discovery of the FILS function may be fast realized for the STA and the AP by using the SIG domain in the physical frame header of the initial link setup first message or the Beacon frame and the MAC (media access control) frame in the PSDU.

In the above technical solution, the second identifier information bit includes one or more bits in a capability information domain of the media access control frame body in the beacon frame and/or the initial link setup first message. In this technical solution, specifically exemplified is the capability information domain for setting the identifier information bit. Those skilled in the art should understand that based on the format change of the Beacon frame or the initial link setup first message, other bits may also be selected as the identifier information bit.

In the above technical solution, the initial link setup first message includes a probe request frame and/or an association request frame. In this technical solution, clearly exemplified are the probe request frame also having the structure in the PSDU form and the association request frame or the combination of both. Those skilled in the art should understand that more messages with the similar structure may be used as the initial link setup first message.

In this technical solution, the physical frame header of the beacon frame and/or the initial link setup first message include the first identifier information bit and/or the physical layer convergence protocol service data unit includes the second identifier information bit, the value of the first identifier information bit being a second value and/or the value of the second identifier information bit being a first value express that the service processing module 402 and/or the access point support the traditional initial link setup function. In this technical solution, the identifier information bits may also be utilized to clearly indicate whether the AP and the STA support the initial link setup function of the traditional mode, and the traditional mode mentioned herein is equivalent to the steps shown in Fig. 1.

In the above technical solution, when both the service processing module 402 and the access point support the fast initial link setup function, the service processing module 402 and the access point set up initial link in a specified mode of fast initial link setup; and/or when both the service processing module 402 and the access point do not support the fast initial link setup function, the service processing module 402 and the access point set up initial link in the traditional initial link setup mode; and/or when the service processing module 402 supports the fast initial link setup function and the access point does not support the fast initial link setup function, the service processing module 402 and the access point set up initial link in the traditional initial link setup mode; and/or when the service processing module 402 does not support the fast initial link setup function and the access point supports the fast initial link setup function, the service processing module 402 and the access point set up initial link in the traditional initial link setup mode. In this technical solution, it can be ensured that after whether the STA supports the FILS function is learnt, the AP may select an appropriate mode to set up initial link with the STA in conjunction with whether the AP supports the FILS function, and the traditional mode mentioned herein is equivalent to the steps shown in Fig. 1.

Figs. 5A to 5C are flow diagrams of a fast initial link setup communication method according to an embodiment of the present invention.

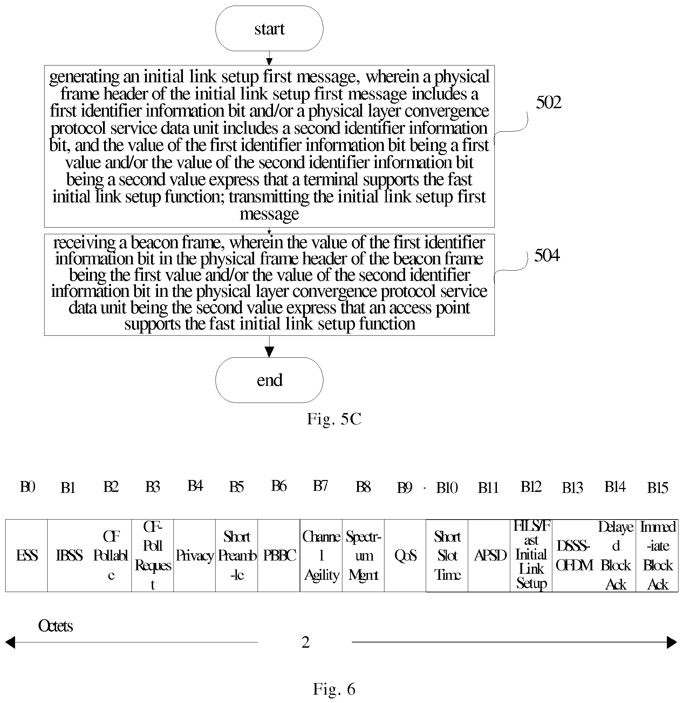

As shown in Fig. 5A, the present invention further provides a fast initial link setup communication method, including: step 502, generating an initial link setup first message, wherein a physical frame header of the initial link setup first message includes a first identifier information bit and/or a physical layer convergence protocol service data unit includes a second identifier information bit, and the value of the first identifier information bit being a first value and/or the value of the second identifier information bit being a second value express that a terminal supports the fast initial link setup function; and transmitting the initial link setup first message. As shown in Fig. 5B, the present invention further provides a fast initial link setup communication method, including: step 504, receiving a beacon frame, wherein the value of the first identifier information bit in the physical frame header of the beacon frame being the first value and/or the value of the second identifier information bit in the physical layer convergence protocol service data unit being the second value express that an access point supports the fast initial link setup function. As shown in Fig. 5C, the present invention further provides a fast initial link setup communication method, including: step 502, generating an initial link setup first message, wherein a physical frame header of the initial link setup first message includes a first identifier information bit and/or a physical layer convergence protocol service data unit includes a second identifier information bit, and the value of the first identifier information bit being a first value and/or the value of the second identifier information bit being a second value express that the terminal supports the fast initial link setup function; transmitting the initial link setup first message; and step 504, receiving the beacon frame, wherein the value of the first identifier information bit in the physical frame header of the beacon frame being the first value and/or the value of the second identifier information bit in the physical layer convergence protocol service data unit being the second value express that an access point supports the fast initial link setup function. In this technical solution, an STA may previously notify whether the STA supports the FILS function by using the initial link setup first message or judge whether an AP supports the FILS function according to the Beacon frame of the AP, so that both the AP and the STA can set up initial link with the each other in an appropriate mode.

In the above technical solution, the PSDU (PLCP service data unit, physical layer convergence protocol service data unit) includes an MPDU (MAC protocol data unit, media access control protocol data unit), the MPDU is a media access control frame, and the MAC frame includes a media access control frame header and a media access control frame body. In this technical solution, as long as the initial link setup first message includes the PSDU, the FILS function may be identified by using the frame body part of the MPDU in the PSDU.

In the above technical solution, the first identifier information bit includes one or more bits in a signal domain of the physical frame header of the beacon frame and/or the initial link setup first message; and the second identifier information bit includes one or more bits in the media access control frame of the beacon frame and/or the initial link setup first message. In this technical solution, notification and discovery of the FILS function may be fast realized for the STA and the AP by using the SIG domain in the physical frame header of the initial link setup first message or the Beacon frame and the MAC (media access control) frame in the PSDU.

In the above technical solution, the second identifier information bit includes one or more bits in a capability information domain of the media access control frame body in the beacon frame and/or the initial link setup first message. In this technical solution, specifically exemplified is the capability information domain for setting the identifier information bit. Those skilled in the art should understand that based on the format change of the Beacon frame or the initial link setup first message, other bits may also be selected as the identifier information bit.

In the above technical solution, preferably, the initial link setup first message includes a probe request frame and/or an association request frame. In this technical solution, clearly exemplified are the probe request frame also having the structure in the PSDU form and the association request frame or the combination of both. Those skilled in the art should understand that more messages with the similar structure may be used as the initial link setup first message.

In this technical solution, the physical frame header of the beacon frame and/or the initial link setup first message include the first identifier information bit and/or the physical layer convergence protocol service data unit includes the second identifier information bit, the value of the first identifier information bit being a second value and/or the value of the second identifier information bit being a first value express that the service processing module and/or the access point support the traditional initial link setup function. In this technical solution, the identifier information bits may also be utilized to clearly indicate whether the AP and the STA support the initial link setup function of the traditional mode, and the traditional mode mentioned herein is equivalent to the steps shown in Fig. 1.

In the above technical solution, the method further includes: when both the terminal and the access point support the fast initial link setup function, the terminal and the access point set up initial link in a specified mode of fast initial link setup; and/or when both the terminal and the access point do not support the fast initial link setup function, the terminal and the access point set up initial link in the traditional initial link setup mode; and/or when the terminal supports the fast initial link setup function and the access point does not support the fast initial link setup function, the terminal and the access point set up initial link in the traditional initial link setup mode; and/or when the terminal does not support the fast initial link setup function and the access point supports the fast initial link setup function, the terminal and the access point set up initial link in the traditional initial link setup mode. In this technical solution, it can be ensured that after whether the STA supports the FILS function is learnt, the AP may select an appropriate mode to set up initial link with the STA in conjunction with whether the AP supports the FILS function, and the traditional mode mentioned herein is equivalent to the steps shown in Fig. 1.

The technical solutions of the present invention will be described in detail below through an embodiment of the present invention.

In an embodiment of the present invention, provided are two modes of indicating whether the AP or the STA supports the FILS function, wherein in one mode, whether the AP supports the FILS function is indicated by using the physical frame header of the Beacon frame or the MAC frame body; and in the other mode, whether the STA supports the FILS function is indicated by using the physical frame header of the initial link setup first message in a PPDU (physical layer convergence protocol data unit) format such as the probe request or the association request, and the MAC frame body; and the detailed descriptions are as follows.

### 1, indication in the MAC frame body:

The STA sets up initial link with the AP in two modes, namely passive scanning and active scanning. The passive scanning means that the STA listens to the Beacon frame periodically broadcasted by the AP, the active scanning means that the STA transmits a request message of a probe request or association request frame or the like to the AP, and the former mode is generally adopted when the STA sets up the initial link.

No matter the AP broadcasts the Beacon frame or the STA transmits the initial link setup first message, including the probe request frame and the association request frame, both the Beacon frame and the initial link setup first message are finally transmitted in the form of the PPDU (PLCP protocol data unit, physical layer convergence protocol data unit), the PPDU format includes a physical frame header part and a data part, wherein the data part is the PSDU (PLCP service data unit, physical layer convergence protocol data unit) including the MPDU (MAC protocol data unit, media access control protocol data unit), and the MPDU is an MAC (media access control) frame divided into an MAC frame header and an MAC frame body.

The capability information domain exists in the MAC frame body of the PSDU of the Beacon frame and indicates capability information elements of the AP, specifically see

Fig. 6, there is a reserved bit B12 in the structure of this frame, the AP may use B12 as an FILS function bit, wherein 0: indicates that the AP does not support the FILS function, and 1: indicates that the AP supports the FILS function.

In the initial link setup message, taking the probe request as an example, the FILS function may be indicated likewise by designing the MAC frame body part of the probe request also having the structure in the PPDU form, and the following table shows the frame body structure of the probe request, wherein the frame body structure includes FILS capability (fast initial link setup function) for indicating whether the STA supports the FILS function. The MAC frame body part of the association request may be designed likewise as in the following table.

| Order | Information | Notes |
|---|---|---|
| 1 | SSID (Service Set Identification) | |
| 2 | Supported rates | |
| 3 | Request information | May be included if dot11MultiDomainCapabilityEnabled is true. |
| 4 | Extended Supported Rates | The Extended Supported Rates element is present whenever there are more than eight supported rates, and it is optional otherwise. |
| 5 | FILS capability (fast initial link setup function) | Indicate STA to support FILS function |
| Last | Vendor Specific | One or more vendor-specific information elements may appear in this frame. This information element follows all other information elements. |

### 2, indication in the physical frame header

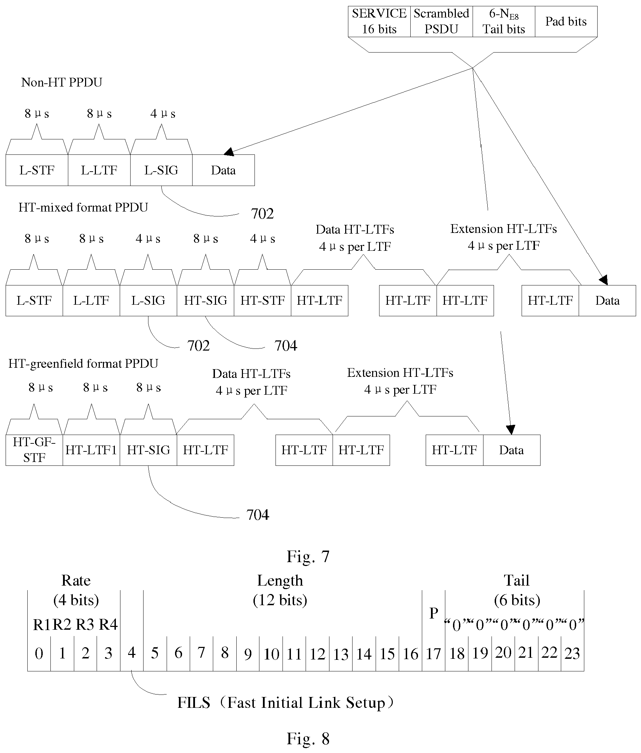

No matter the AP broadcasts the Beacon frame or the STA transmits the initial link setup first message, including the probe request frame and the association request frame, both the Beacon frame and the initial link setup first message are finally transmitted in the form of the PPDU (physical layer convergence protocol data unit), the structures of the Beacon frame and the initial link setup first message are shown in Fig. 7, the data part of the PPDU is the PSDU (PLCP service data unit, physical layer convergence protocol data unit) including the MAC frame, the physical frame header part includes a SIG (signal) domain, and this domain may be composed of different parts in different PPDU forms and may only include an L-SIG (legacy signal domain) 702 or only include an HT-SIG (high throughput signal domain) 704 or include both, wherein L is the abbreviation of Legacy, and HT is the abbreviation of high throughput.

As shown in Fig. 8, the AP takes the reserved bit (namely the 4^{th} bit) of the L-SIG domain in the Beacon frame as an FILS (fast initial link setup) function bit, if the bit is set to 0, it indicates that the AP does not support the FILS function, and if the bit is set to 1, it indicates that the AP supports the FILS function;

similarly, the STA takes the reserved bit (namely the 4^{th} bit) of the L-SIG domain in the physical frame header of the probe request or the association request as an FILS (fast initial link setup) function bit, if the bit is set to 0, it indicates that the STA does not support the FILS function, and if the bit is set to 1, it indicates that the STA supports the FILS function.

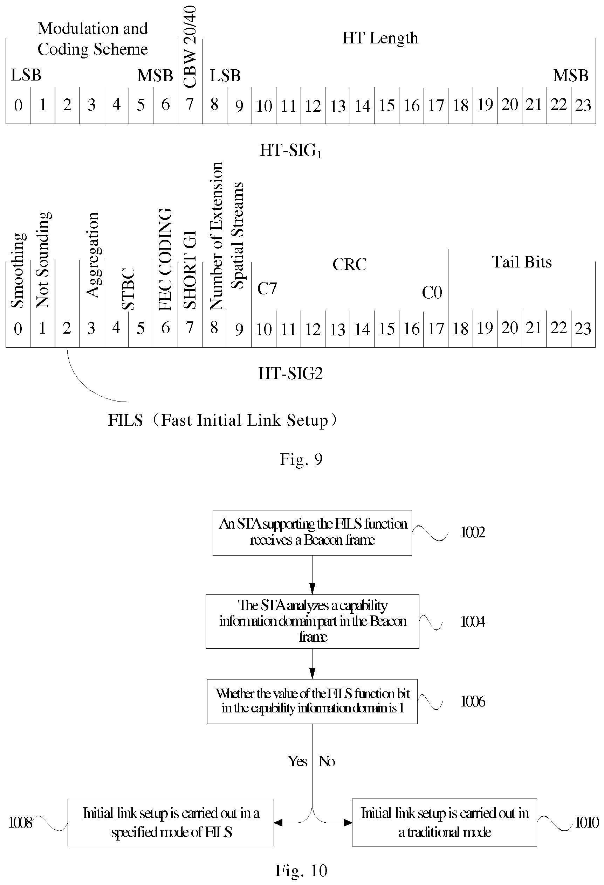

As shown in Fig. 9, the HT-SIG domain includes two parts, namely HT-SIG₁ and HT-SIG₂, wherein the part HT-SIG₁ does not have a reserved bit, so the AP takes the reserved bit (namely the 2^{nd} bit) of the HT-SIG₂ domain in the physical frame header of the Beacon frame as an FILS function bit; if the bit is set to 0, it indicates that the AP does not support the FILS function; and if the bit is set to 1, it indicates that the AP supports the FILS function;

similarly, the STA takes the reserved bit (namely the 2^{nd} bit) of the HT-SIG₂ domain in the physical frame header of the probe request or the association request as an FILS function bit; if the bit is set to 0, it indicates that the STA does not support the FILS function, and if the bit is set to 1, it indicates that the STA supports the FILS function.

According to the above descriptions, the flow of setting up initial link between the STA and the AP through passive scanning is shown in Fig. 10.

Step 1002, an STA supporting the FILS function receives a Beacon frame from an AP.

Step 1004, the STA analyzes a capability information domain part in an MAC frame body of the Beacon frame, and extracts the value of an FILS function bit therein. Step 1006, whether the value of the FILS function bit in the capability information domain is 1 is judged.

Step 1008, if the value is 1, the AP supporting the FILS function may be determined, and initial link setup is carried out in a specified mode of FILS.

Step 1010, if the value is 0, the AP not supporting the FILS function may be determined, and the initial link between the STA and the AP is set up in a normal mode, namely the mode shown in Fig. 1.

The working flow of the STA and the AP may also be as follows.

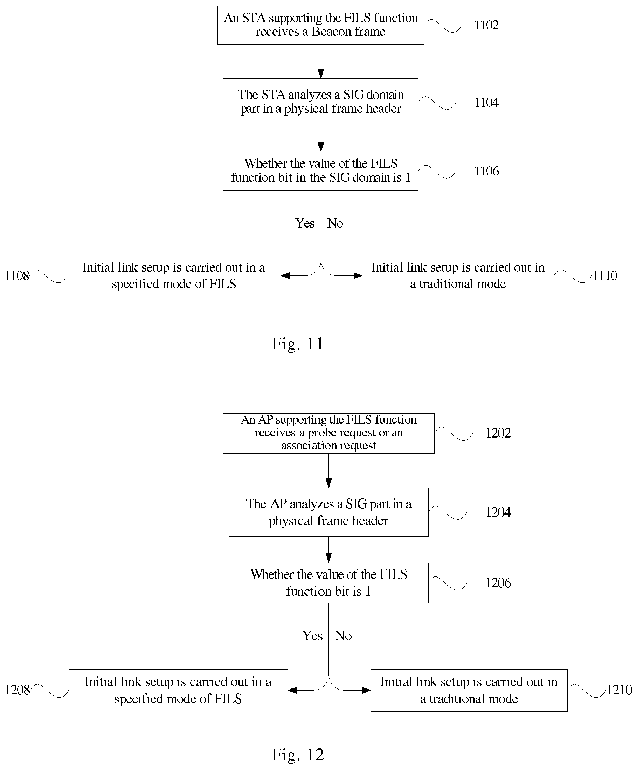

According to the above descriptions, the flow of setting up the link between the STA and the AP may also be shown in Fig 11:
Step 1102, the STA supporting the FILS function receives a Beacon frame from the AP.
Step 1104, the STA analyzes a SIG domain part in a physical frame header of the Beacon frame, and extracts the value of an FILS function bit therein.
Step 1106, whether the value of the FILS function bit in the SIG domain is 1 is judged.
Step 1108, if the value is 1, the AP supporting the FILS function may be determined, and initial link setup is carried out in a specified mode of FILS.
Step 1110, if the value is 0, the AP not supporting the FILS function may be determined, and the initial link between the STA and the AP is set up in a normal mode, namely the mode shown in Fig. 1.

The flow of setting up initial link between the STA and the AP through active scanning is shown in Fig. 12.

Step 1202, the STA transmits a probe request or an association request, and the AP supporting the FILS function receives the probe request or the association request at the same time.

Step 1204, the AP analyzes a SIG domain part in a physical frame header of the probe request or association request frame, and extracts the value of an FILS function bit therein.

Step 1206, whether the value of the FILS function bit is 1 is judged.

Step 1208, if the value is 1, the STA supporting the FILS function may be determined, and initial link setup is carried out in a specified mode of FILS.

Step 1210, if the value is 0, the STA not supporting the FILS function may be determined, and the initial link between the STA and the AP is set up in a normal mode, namely the mode shown in Fig. 1.

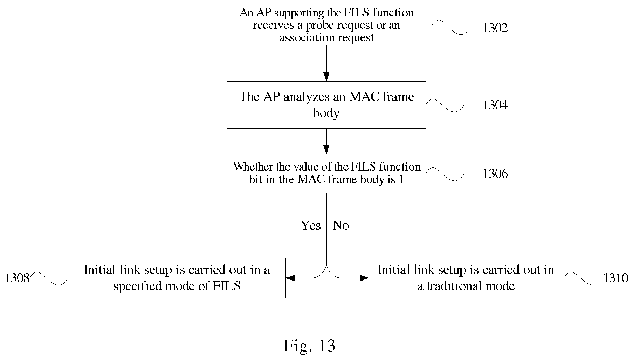

Another flow of setting up initial link between the STA and the AP through active scanning is shown in Fig. 13.

Step 1302, the STA transmits a probe request or an association request, and the AP supporting the FILS function receives the probe request or the association request at the same time.

Step 1304, the AP analyzes an MAC frame body part in the probe request or association request frame, and extracts the value of an FILS function bit therein.

Step 1306, whether the value of the FILS function bit is 1 is judged.

Step 1308, if the value is 1, the STA supporting the FILS function may be determined, and initial link setup is carried out in a specified mode of FILS.

Step 1310, if the value is 0, the STA not supporting the FILS function may be determined, and the initial link between the STA and the AP is set up in a normal mode, namely the mode shown in Fig. 1.

Through the above technical solutions of the present invention, the fast initial link setup communication device and the fast initial link setup communication method can be realized, and the STA or the AP may previously act to determine adoption of an FILS mode or a non-FILS mode through the indication of supporting the FILS function carried in the physical frame header part or the MAC frame body part, so as to speed up the process for the STA to fast set up the initial link; meanwhile, the problem of incompatibility between the STA supporting/not supporting the FILS function and the AP supporting/not supporting the FILS function.

## Claims

1. A fast initial link setup communication device (200), comprising:
a service processing module (202) adapted for generating a beacon frame comprising a physical layer convergence protocol service data unit, wherein
a physical frame header of the beacon frame comprises a first identifier information field and the physical layer convergence protocol service data unit of the beacon frame comprises a second identifier information field, and
the values of the first identifier information field being first values and/or the values of the second identifier information field being second values indicate that the service processing module (202) is adapted to support the fast initial link setup function, and is adapted for transmitting the beacon frame via a wireless transceiver module (204); and/or is adapted for receiving an initial link setup first message via the wireless transceiver module (204), wherein
a physical frame header of the initial link setup first message comprises a first identifier information field and the physical layer convergence protocol service data unit of the initial link setup first message comprises a second identifier information field, and
the values of the first identifier information field in the physical frame header of the initial link setup first message being the first values and/or the values of the second identifier information field in the physical layer convergence protocol service data unit of the initial link setup first message being the second values indicate that a terminal is adapted to the fast initial link setup function;
the wireless transceiver module (204) is adapted for exchanging data with the outside of said fast initial link setup communication device (200);
the physical layer convergence protocol service data unit comprises a media access control protocol data unit, which is a media access control frame including a media access control frame header and a media access control frame body;
the first identifier information field comprises one or more bits in a signal domain of the physical frame header of the beacon frame and/or the initial link setup first message; and
the second identifier information field comprises one or more bits in the media access control frame of the beacon frame and/or the initial link setup first message;
the second identifier information field comprises one or more bits in a capability information domain of the media access control frame body of the beacon frame and/or the initial link setup first message.

2. The fast initial link setup communication device (200) of claim 1, wherein
the initial link setup first message comprises a probe request frame and/or an association request frame;
the physical frame header of the beacon frame and/or the initial link setup first message comprise the first identifier information field and/or the physical layer convergence protocol service data unit comprises the second identifier information field, the values of the first identifier information field being second values and/or the values of the second identifier information field being first values express that the service processing module (202) and/or the terminal support the traditional initial link setup function.

3. The fast initial link setup communication device (200) of any of claims 1 to 2, wherein
when both the service processing module (202) and the terminal support the fast initial link setup function, the service processing module (202) and the terminal set up initial link in a specified mode of fast initial link setup; and/or
when both the service processing module (202) and the terminal do not support the fast initial link setup function, the service processing module (202) and the terminal set up initial link in the traditional initial link setup mode; and/or
when the service processing module (202) supports the fast initial link setup function and the terminal does not support the fast initial link setup function, the service processing module (202) and the terminal set up initial link in the traditional initial link setup mode; and/or
when the service processing module (202) does not support the fast initial link setup function and the terminal supports the fast initial link setup function, the service processing module (202) and the terminal set up initial link in the traditional initial link setup mode.

4. A fast initial link setup communication method, comprising:
generating a beacon frame comprising a physical layer convergence protocol service data unit, wherein a physical frame header of the beacon frame comprises a first identifier information field and the physical layer convergence protocol service data unit of the beacon frame comprises a second identifier information field, and the values of the first identifier information field being first values and/or the values of the second identifier information field being second values inticate that an access point (AP) is adapted to support the fast initial link setup function; transmitting the beacon frame; and/or
receiving an initial link setup first message, wherein
a physical frame header of the initial link setup first message comprises a first identifier information field and the physical layer convergence protocol service data unit of the initial link setup first message comprises a second identifier information field, and
the values of the first identifier information field in the physical frame header of the initial link setup first message being the first values and/or the values of the second identifier information field in the physical layer convergence protocol service data unit of the initial link setup first message being the second values indicate that a terminal is adapted to support the fast initial link setup function, wherein
the physical layer convergence protocol service data unit comprises a media access control protocol data unit, which is a media access control frame including a media access control frame header and a media access control frame body;
the first identifier information field comprises one or more bits in a signal domain of the physical frame header of the beacon frame and/or the initial link setup first message;
the second identifier information field comprises one or more bits in the media access control frame of the beacon frame and/or the initial link setup first message; and
the second identifier information field comprises one or more bits in a capability information domain of the media access control frame body of the beacon frame and/or the initial link setup first message.

5. The fast initial link setup communication method of claim 4, wherein
the initial link setup first message comprises a probe request frame and/or an association request frame;
the physical frame header of the beacon frame and/or the initial link setup first message comprise the first identifier information field and/or the physical layer convergence protocol service data unit comprises the second identifier information field, the values of the first identifier information field being second values and/or the values of the second identifier information field being first values express that the access point (AP) and/or the terminal support the traditional initial link setup function.

6. The fast initial link setup communication method of any of claims 4 to 5, further comprising:
when both the access point (AP) and the terminal support the fast initial link setup function, the access point (AP) and the terminal set up initial link in a specified mode of fast initial link setup; and/or
when both the access point (AP) and the terminal do not support the fast initial link setup function, the access point (AP) and the terminal set up initial link in the traditional initial link setup mode; and/or
when the access point (AP) supports the fast initial link setup function and the terminal does not support the fast initial link setup function, the access point (AP) and the terminal set up initial link in the traditional initial link setup mode; and/or
when the access point (AP) does not support the fast initial link setup function and the terminal supports the fast initial link setup function, the access point (AP) and the terminal set up initial link in the traditional initial link setup mode.

7. A fast initial link setup communication device (200), comprising:
a service processing module (202) adapted for generating an initial link setup first message comprising the physical layer convergence protocol service data unit, wherein
a physical frame header of the initial link setup first message comprises a first identifier information field and the physical layer convergence protocol service data unit of the intial link setup first message comprises a second identifier information field, and
the values of the first identifier information field being first values and/or the values of the second identifier information field being second values indicate
that the service processing module (202) is adapted to the fast initial link setup function, and is
adapted for transmitting the initial link setup first message via a wireless transceiver module (204); and/or is adapted for receiving a beacon frame via the wireless transceiver module (204), wherein
a physical frame header of the beacon frame comprises a first identifier information field and the physical layer convergence protocol service data unit of the beacon frame comprises a second identifier information field, and
the values of the first identifier information field in the physical frame header of the beacon frame being the first values and/or the values of the second identifier information field in the physical layer convergence protocol service data unit being the second values indicate that an access point (AP) is adapted to support the Fast Initial Link Setup, FILS, function;
the wireless transceiver module (204) is adapted for exchanging data with the outside of said fast initial link setup communication device (200);
the physical layer convergence protocol service data unit comprises a media access control protocol data unit, which is a media access control frame including a media access control frame header and a media access control frame body;
the first identifier information field comprises one or more bits in a signal domain of the physical frame header of the beacon frame and/or the initial link setup first message;
the second identifier information field comprises one or more bits in the media access control frame of the beacon frame and/or the initial link setup first message; and
the second identifier information field comprises one or more bits in a capability information domain of the media access control frame body of the beacon frame and/or the initial link setup first message.

8. The fast initial link setup communication device (200) of claim 7, wherein
the initial link setup first message comprises a probe request frame and/or an association request frame;
the physical frame header of the beacon frame and/or the initial link setup first message comprise the first identifier information field and/or the physical layer convergence protocol service data unit comprises the second identifier information field, the values of the first identifier information field being second values and/or the values of the second identifier information field being first values express that the service processing module (202) and/or the access point (AP) support the traditional initial link setup function.

9. The fast initial link setup communication device (200) of claim 7, wherein
when both the service processing module (202) and the access point (AP) support the fast initial link setup function, the service processing module (202) and the access point (AP) set up initial link in a specified mode of fast initial link setup; and/or
when both the service processing module (202) and the access point (AP) do not support the fast initial link setup function, the service processing module (202) and the access point (AP) set up initial link in the traditional initial link setup mode; and/or
when the service processing module (202) supports the fast initial link setup function and the access point (AP) does not support the fast initial link setup function, the service processing module (202) and the access point (AP) set up initial link in the traditional initial link setup mode; and/or
when the service processing module (202) does not support the fast initial link setup function and the access point (AP) supports the fast initial link setup function, the service processing module (202) and the access point (AP) set up initial link in the traditional initial link setup mode.

10. A fast initial link setup communication method, comprising:
generating an initial link setup first message comprising the physical layer convergence protocol service data unit, wherein
a physical frame header of the initial link setup first message comprises a first identifier information field and the physical layer convergence protocol service data unit of the intial link setup first message comprises a second identifier information field, and the values of the first identifier information field being first values and/or the values of the second identifier information field being second values indicate that a terminal is adapted to support the fast initial link setup function; transmitting the initial link setup first message; and/or
receiving a beacon frame, wherein
a physical frame header of the beacon frame comprises a first identifier information field and the physical layer convergence protocol service data unit of beacon frame comprises a second identifier information field, and
the values of the first identifier information field in the physical frame header of the beacon frame being the first values and/or the values of the second identifier information field in the physical layer convergence protocol service data unit being the second values indicate that an access point (AP) is adapted to support the fast initial link setup function, wherein
the physical layer convergence protocol service data unit comprises a media access control protocol data unit, which is a media access control frame including a media access control frame header and a media access control frame body;
the first identifier information field comprises one or more bits in a signal domain of the physical frame header of the beacon frame and/or the initial link setup first message;
the second identifier information field comprises one or more bits in the media access control frame of the beacon frame and/or the initial link setup first message;
the second identifier information field comprises one or more bits in a capability information domain of the media access control frame body of the beacon frame and/or the initial link setup first message.

11. The fast initial link setup communication method of claim 10, wherein
the initial link setup first message comprises a probe request frame and/or an association request frame;
the physical frame header of the beacon frame and/or the initial link setup first message comprise the first identifier information field and/or the physical layer convergence protocol service data unit comprises the second identifier information field, the values of the first identifier information field being second values and/or the values of the second identifier information field being first values express that the terminal and/or the access point (AP) support the traditional initial link setup function;
the fast initial link setup communication method further comprises:
when both the terminal and the access point (AP) support the fast initial link setup function, the terminal and the access point (AP) set up initial link in a specified mode of fast initial link setup; and/or
when both the terminal and the access point (AP) do not support the fast initial link setup function, the terminal and the access point (AP) set up initial link in the traditional initial link setup mode; and/or
when the terminal supports the fast initial link setup function and the access point (AP) does not support the fast initial link setup function, the terminal and the access point (AP) set up initial link in the traditional initial link setup mode; and/or
when the terminal does not support the fast initial link setup function and the access point (AP) supports the fast initial link setup function, the terminal and the access point (AP) set up initial link in the traditional initial link setup mode.

## Patentansprüche

1. Kommunikationsvorrichtung (200) mit schneller Anfangs-Übertragungsstreckeneinrichtung, umfassend:
ein Dienstverarbeitungsmodul (202), das dafür ausgelegt ist, einen Bakenrahmen zu erzeugen, der eine Dienstdateneinheit eines Anpassungsprotokolls einer physischen Schicht umfasst, wobei
ein Header eines physischen Rahmens des Bakenrahmens ein erstes Kennungsinformationsfeld umfasst und die Dienstdateneinheit eines Anpassungsprotokolls einer physischen Schicht des Bakenrahmen ein zweites Kennungsinformationsfeld umfasst, und
die Werte des ersten Kennungsinformationsfelds erste Werte sind und/oder die Werte des zweiten Kennungsinformationsfelds zweite Werte sind, die angeben, dass das Dienstverarbeitungsmodul (202)
dafür ausgelegt ist, die Funktion der schnellen Anfangs-Übertragungsstreckeneinrichtung zu unterstützten, und
dafür ausgelegt ist, den Bakenrahmen über ein Drahtlos-Transceiver-Modul (204) zu senden; und/oder
dafür ausgelegt ist, eine erste Mitteilung über eine Anfangs-Übertragungsstreckeneinrichtung über das Drahtlos-Transceiver-Modul (204) zu empfangen, wobei
ein Header eines physischen Rahmens der ersten Mitteilung über eine Anfangs-Übertragungsstreckeneinrichtung ein erstes Kennungsinformationsfeld umfasst und die Dienstdateneinheit eines Anpassungsprotokolls einer physischen Schicht ein zweites Kennungsinformationsfeld umfasst, und
die Werte des ersten Kennungsinformationsfelds im Header der physischen Schicht der ersten Mitteilung über eine Anfangs-Übertragungsstreckeneinrichtung erste Werte sind und/oder die Werte des zweiten Kennungsinformationsfelds in der Dienstdateneinheit eines Anpassungsprotokolls einer physischen Schicht der ersten Mitteilung über eine Anfangs-Übertragungsstreckeneinrichtung zweite Werte sind, die angeben, dass ein Endgerät für die Funktion der schnellen Anfangs-Übertragungsstreckeneinrichtung ausgelegt ist;
das Drahtlos-Transceiver-Modul (204) dafür ausgelegt ist, Daten mit Einrichtungen außerhalb der Kommunikationsvorrichtung (200) mit schneller Anfangs-Übertragungsstreckeneinrichtung auszutauschen;
die Dienstdateneinheit eines Anpassungsprotokolls einer physischen Schicht eine Medienzugriffssteuerprotokoll-Dateneinheit umfasst, die ein Medienzugriffssteuerrahmen ist, der einen Medienzugriffssteuerrahmen-Header und einen Medienzugriffssteuerrahmen-Body umfasst;
das erste Kennungsinformationsfeld ein oder mehrere Bits in einer Signaldomäne des Headers der physischen Schicht des Bakenrahmens und/oder der ersten Mitteilung über eine Anfangs-Übertragungsstreckeneinrichtung umfasst; und
das zweite Kennungsinformationsfeld ein oder mehrere Bits im Medienzugriffssteuerrahmen des Bakenrahmens und/oder in der ersten Mitteilung über eine Anfangs-Übertragungsstreckeneinrichtung umfasst;
das zweite Kennungsinformationsfeld ein oder mehrere Bits in einer Tauglichkeitsinformationsdomäne des Medienzugriffssteuerrahmen-Bodys des Bakenrahmens und/oder der ersten Mitteilung über eine Anfangs-Übertragungsstreckeneinrichtung umfasst.

2. Kommunikationsvorrichtung (200) mit schneller Anfangs-Übertragungsstreckeneinrichtung nach Anspruch 1, wobei
die erste Mitteilung über eine Anfangs-Übertragungsstreckeneinrichtung einen Sondierungsanforderungsrahmen und/oder einen Zuordnungsanforderungsrahmen umfasst;
der Header des physischen Rahmens des Bakenrahmens und/oder der ersten Mitteilung über eine Anfangs-Übertragungsstreckeneinrichtung das erste Kennungsinformationsfeld umfasst bzw. umfassen und/oder die Dienstdateneinheit eines Anpassungsprotokolls einer physischen Schicht das zweite Kennungsinformationsfeld umfasst, wobei die Werte des ersten Kennungsinformationsfelds zweite Werte sind und/oder die Werte des zweiten Kennungsinformationsfelds erste Werte sind, die ausdrücken, dass das Dienstverarbeitungsmodul (202) und/oder das Endgerät die herkömmliche Funktion einer Anfangs-Übertragungsstreckeneinrichtung unterstützt bzw. unterstützen.

3. Kommunikationsvorrichtung (200) mit schneller Anfangs-Übertragungsstreckeneinrichtung nach einem der Ansprüche 1 bis 2, wobei,
wenn sowohl das Dienstverarbeitungsmodul (202) als auch das Endgerät die Funktion einer schnellen Anfangs-Übertragungsstreckeneinrichtung unterstützen, das Dienstverarbeitungsmodul (202) und das Endgerät eine Anfangs-Übertragungsstrecke in einem vorgegebenen Modus einer schnellen Anfangs-Übertragungsstreckeneinrichtung einrichten; und/oder
wenn weder das Dienstverarbeitungsmodul (202) noch das Endgerät die Funktion einer schnellen Anfangs-Übertragungsstreckeneinrichtung unterstützen, das Dienstverarbeitungsmodul (202) und das Endgerät eine Anfangs-Übertragungsstrecke im herkömmlichen Anfangs-Übertragungsstreckeneinrichtungsmodus einrichten; und/oder
wenn das Dienstverarbeitungsmodul (202) die Funktion einer schnellen Anfangs-Übertragungsstreckeneinrichtung unterstützt und das Endgerät die Funktion einer schnellen Anfangs-Übertragungsstreckeneinrichtung nicht unterstützt, das Dienstverarbeitungsmodul (202) und das Endgerät eine Anfangs-Übertragungsstrecke im herkömmlichen Anfangs-Übertragungsstreckeneinrichtungsmodus einrichten; und/oder
wenn das Dienstverarbeitungsmodul (202) die Funktion einer schnellen Anfangs-Übertragungsstreckeneinrichtung nicht unterstützt und das Endgerät die Funktion einer schnellen Anfangs-Übertragungsstreckeneinrichtung unterstützt, das Dienstverarbeitungsmodul (202) und das Endgerät eine Anfangs-Übertragungsstrecke im herkömmlichen Anfangs-Übertragungsstreckeneinrichtungsmodus einrichten.

4. Kommunikationsverfahren mit schneller Anfangs-Übertragungsstreckeneinrichtung, umfassend:
Erzeugen eines Bakenrahmens, der eine Dienstdateneinheit eines Anpassungsprotokolls einer physischen Schicht umfasst, wobei ein Header eines physischen Rahmens des Bakenrahmens ein erstes Kennungsinformationsfeld umfasst und die Dienstdateneinheit eines Anpassungsprotokolls einer physischen Schicht des Bakenrahmens ein zweites Kennungsinformationsfeld umfasst, und wobei die Werte des ersten Kennungsinformationsfelds erste Werte sind und/oder die Werte des zweiten Kennungsinformationsfelds zweite Werte sind, die angeben, dass ein Zugriffspunkt (AP) dafür ausgelegt ist, die Funktion einer schnellen Anfangs-Übertragungsstreckeneinrichtung zu unterstützen; Senden des Bakenrahmens; und/oder
Empfangen einer ersten Mitteilung über eine Anfangs-Übertragungsstreckeneinrichtung, wobei
ein Header eines physischen Rahmens der ersten Mitteilung über eine Anfangs-Übertragungsstreckeneinrichtung ein erstes Kennungsinformationsfeld umfasst und die Dienstdateneinheit eines Anpassungsprotokolls einer physischen Schicht ein zweites Kennungsinformationsfeld umfasst, und
die Werte des ersten Kennungsinformationsfelds im Header der physischen Schicht der ersten Mitteilung über eine Anfangs-Übertragungsstreckeneinrichtung erste Werte sind und/oder die Werte des zweiten Kennungsinformationsfelds in der Dienstdateneinheit eines Anpassungsprotokolls einer physischen Schicht der ersten Mitteilung über eine Anfangs-Übertragungsstreckeneinrichtung zweite Werte sind, die angeben, dass ein Endgerät dafür ausgelegt ist, die Funktion der schnellen Anfangs-Übertragungsstreckeneinrichtung zu unterstützen, wobei
die Dienstdateneinheit eines Anpassungsprotokolls einer physischen Schicht eine Medienzugriffssteuerprotokoll-Dateneinheit umfasst, die ein Medienzugriffssteuerrahmen ist, der einen Medienzugriffssteuerrahmen-Header und einen Medienzugriffssteuerrahmen-Body umfasst;
das erste Kennungsinformationsfeld ein oder mehrere Bits in einer Signaldomäne des Headers der physischen Schicht des Bakenrahmens und/oder der ersten Mitteilung über eine Anfangs-Übertragungsstreckeneinrichtung umfasst;
das zweite Kennungsinformationsfeld ein oder mehrere Bits im Medienzugriffssteuerrahmen des Bakenrahmens und/oder in der ersten Mitteilung über eine Anfangs-Übertragungsstreckeneinrichtung umfasst; und
das zweite Kennungsinformationsfeld ein oder mehrere Bits in einer Tauglichkeitsinformationsdomäne des Medienzugriffssteuerrahmen-Bodys des Bakenrahmens und/oder der ersten Mitteilung über eine Anfangs-Übertragungsstreckeneinrichtung umfasst.

5. Kommunikationsverfahren mit schneller Anfangs-Übertragungsstreckeneinrichtung nach Anspruch 4, wobei
die erste Mitteilung über eine Anfangs-Übertragungsstreckeneinrichtung einen Sondierungsanforderungsrahmen und/oder einen Zuordnungsanforderungsrahmen umfasst;
der Header des physischen Rahmens des Bakenrahmens und/oder der ersten Mitteilung über eine Anfangs-Übertragungsstreckeneinrichtung das erste Kennungsinformationsfeld umfasst bzw. umfassen und/oder die Dienstdateneinheit eines Anpassungsprotokolls einer physischen Schicht das zweite Kennungsinformationsfeld umfasst, wobei die Werte des ersten Kennungsinformationsfelds zweite Werte sind und/oder die Werte des zweiten Kennungsinformationsfelds erste Werte sind, die ausdrücken, dass der Zugriffspunkt (AP) und/oder das Endgerät die herkömmliche Funktion einer Anfangs-Übertragungsstreckeneinrichtung unterstützt bzw. unterstützen.

6. Kommunikationsverfahren mit schneller Anfangs-Übertragungsstreckeneinrichtung nach einem der Ansprüche 4 bis 5, ferner umfassend:
wenn sowohl der Zugriffspunkt (AP) als auch das Endgerät die Funktion einer schnellen Anfangs-Übertragungsstreckeneinrichtung unterstützen, richten der Zugriffspunkt (AP) und das Endgerät eine Anfangs-Übertragungsstrecke in einem vorgegebenen Modus einer schnellen Anfangs-Übertragungsstreckeneinrichtung ein; und/oder
wenn weder der Zugriffspunkt (AP) noch das Endgerät die Funktion einer schnellen Anfangs-Übertragungsstreckeneinrichtung unterstützen, richten der Zugriffspunkt (AP) und das Endgerät eine Anfangs-Übertragungsstrecke im herkömmlichen Anfangs-Übertragungsstreckeneinrichtungsmodus ein; und/oder
wenn der Zugriffspunkt (AP) die Funktion einer schnellen Anfangs-Übertragungsstreckeneinrichtung unterstützt und das Endgerät die Funktion einer schnellen Anfangs-Übertragungsstreckeneinrichtung nicht unterstützt, richten der Zugriffspunkt (AP) und das Endgerät eine Anfangs-Übertragungsstrecke im herkömmlichen Anfangs-Übertragungsstreckeneinrichtungsmodus ein;
und/oder
wenn der Zugriffspunkt (AP) die Funktion einer schnellen Anfangs-Übertragungsstreckeneinrichtung nicht unterstützt und das Endgerät die Funktion einer schnellen Anfangs-Übertragungsstreckeneinrichtung unterstützt, richten der Zugriffspunkt (AP) und das Endgerät eine Anfangs-Übertragungsstrecke im herkömmlichen Anfangs-Übertragungsstreckeneinrichtungsmodus ein.

7. Kommunikationsvorrichtung (200) mit schneller Anfangs-Übertragungsstreckeneinrichtung, umfassend:
ein Dienstverarbeitungsmodul (202), das dafür ausgelegt ist, eine erste Mitteilung über eine Anfangs-Übertragungsstreckeneinrichtung zu erzeugen, welche die Dienstdateneinheit eines Anpassungsprotokolls einer physischen Schicht umfasst, wobei
ein Header eines physischen Rahmens der ersten Mitteilung über eine Anfangs-Übertragungsstreckeneinrichtung ein erstes Kennungsinformationsfeld umfasst und die Dienstdateneinheit eines Anpassungsprotokolls einer physischen Schicht ein zweites Kennungsinformationsfeld umfasst, und
die Werte des ersten Kennungsinformationsfelds erste Werte sind und/oder die Werte des zweiten Kennungsinformationsfelds zweite Werte sind, die angeben, dass das Dienstverarbeitungsmodul (202) für die Funktion der schnellen Anfangs-Übertragungsstreckeneinrichtung ausgelegt ist und
dafür ausgelegt ist, die erste Mitteilung über eine Anfangs-Übertragungsstreckeneinrichtung über ein Drahtlos-Transceiver-Modul (204) zu senden; und/oder
dafür ausgelegt ist, über das Drahtlos-Transceiver-Modul (204) einen Bakenrahmen zu empfangen, wobei
ein Header eines physischen Rahmens des Bakenrahmens ein erstes Kennungsinformationsfeld umfasst und die Dienstdateneinheit eines Anpassungsprotokolls einer physischen Schicht des Bakenrahmen ein zweites Kennungsinformationsfeld umfasst, und
die Werte des ersten Kennungsinformationsfelds im Header der physischen Schicht des Bakenrahmens erste Werte sind und/oder die Werte des zweiten Kennungsinformationsfelds in der Dienstdateneinheit eines Anpassungsprotokolls einer physischen Schicht der ersten Mitteilung über eine Anfangs-Übertragungsstreckeneinrichtung zweite Werte sind, die angeben, dass ein Zugriffspunkt (AP) dafür ausgelegt ist, die Funktion der schnellen Anfangs-Übertragungsstreckeneinrichtung, FILS, zu unterstützen;
das Drahtlos-Transceiver-Modul (204) dafür ausgelegt ist, Daten mit Einrichtungen außerhalb der Kommunikationsvorrichtung (200) mit schneller Anfangs-Übertragungsstreckeneinrichtung auszutauschen;
die Dienstdateneinheit eines Anpassungsprotokolls einer physischen Schicht eine Medienzugriffssteuerprotokoll-Dateneinheit umfasst, die ein Medienzugriffssteuerrahmen ist, der einen Medienzugriffssteuerrahmen-Header und einen Medienzugriffssteuerrahmen-Body umfasst;
das erste Kennungsinformationsfeld ein oder mehrere Bits in einer Signaldomäne des Headers der physischen Schicht des Bakenrahmens und/oder der ersten Mitteilung über eine Anfangs-Übertragungsstreckeneinrichtung umfasst;
das zweite Kennungsinformationsfeld ein oder mehrere Bits im Medienzugriffssteuerrahmen des Bakenrahmens und/oder in der ersten Mitteilung über eine Anfangs-Übertragungsstreckeneinrichtung umfasst; und
das zweite Kennungsinformationsfeld ein oder mehrere Bits in einer Tauglichkeitsinformationsdomäne des Medienzugriffssteuerrahmen-Bodys des Bakenrahmens und/oder der ersten Mitteilung über eine Anfangs-Übertragungsstreckeneinrichtung umfasst.

8. Kommunikationsvorrichtung (200) mit schneller Anfangs-Übertragungsstreckeneinrichtung nach Anspruch 7, wobei
die erste Mitteilung über eine Anfangs-Übertragungsstreckeneinrichtung einen Sondierungsanforderungsrahmen und/oder einen Zuordnungsanforderungsrahmen umfasst;
der Header des physischen Rahmens des Bakenrahmens und/oder der ersten Mitteilung über eine Anfangs-Übertragungsstreckeneinrichtung das erste Kennungsinformationsfeld umfasst bzw. umfassen und/oder die Dienstdateneinheit eines Anpassungsprotokolls einer physischen Schicht das zweite Kennungsinformationsfeld umfasst, wobei die Werte des ersten Kennungsinformationsfelds zweite Werte sind und/oder die Werte des zweiten Kennungsinformationsfelds erste Werte sind, die ausdrücken, dass das Dienstverarbeitungsmodul (202) und/oder der Zugriffspunkt (AP) die herkömmliche Funktion einer Anfangs-Übertragungsstreckeneinrichtung unterstützt bzw. unterstützen.

9. Kommunikationsvorrichtung (200) mit schneller Anfangs-Übertragungsstreckeneinrichtung nach Anspruch 7, wobei,
wenn sowohl das Dienstverarbeitungsmodul (202) als auch der Zugriffspunkt (AP) die Funktion einer schnellen Anfangs-Übertragungsstreckeneinrichtung unterstützen, das Dienstverarbeitungsmodul (202) und der Zugriffspunkt (AP) eine Anfangs-Übertragungsstrecke in einem vorgegebenen Modus einer schnellen Anfangs-Übertragungsstreckeneinrichtung einrichten; und/oder
wenn weder das Dienstverarbeitungsmodul (202) noch der Zugriffspunkt (AP) die Funktion einer schnellen Anfangs-Übertragungsstreckeneinrichtung unterstützen, das Dienstverarbeitungsmodul (202) und der Zugriffspunkt (AP) eine Anfangs-Übertragungsstrecke im herkömmlichen Anfangs-Übertragungsstreckeneinrichtungsmodus einrichten; und/oder
wenn das Dienstverarbeitungsmodul (202) die Funktion einer schnellen Anfangs-Übertragungsstreckeneinrichtung unterstützt und der Zugriffspunkt (AP) die Funktion einer schnellen Anfangs-Übertragungsstreckeneinrichtung nicht unterstützt, das Dienstverarbeitungsmodul (202) und der Zugriffspunkt (AP) eine Anfangs-Übertragungsstrecke im herkömmlichen Anfangs-Übertragungsstreckeneinrichtungsmodus einrichten; und/oder
wenn das Dienstverarbeitungsmodul (202) die Funktion einer schnellen Anfangs-Übertragungsstreckeneinrichtung nicht unterstützt und der Zugriffspunkt (AP) die Funktion einer schnellen Anfangs-Übertragungsstreckeneinrichtung unterstützt, das Dienstverarbeitungsmodul (202) und der Zugriffspunkt (AP) eine Anfangs-Übertragungsstrecke im herkömmlichen Anfangs-Übertragungsstreckeneinrichtungsmodus einrichten.

10. Kommunikationsverfahren mit schneller Anfangs-Übertragungsstreckeneinrichtung, umfassend:
Erzeugen einer ersten Mitteilung über eine Anfangs-Übertragungsstreckeneinrichtung, welche die Dienstdateneinheit eines Anpassungsprotokolls einer physischen Schicht umfasst, wobei
ein Header der ersten Mitteilung über eine Anfangs-Übertragungsstreckeneinrichtung ein erstes Kennungsinformationsfeld umfasst und die Dienstdateneinheit eines Anpassungsprotokolls einer physischen Schicht der ersten Mitteilung über eine Anfangs-Übertragungsstreckeneinrichtung ein zweites Kennungsinformationsfeld umfasst, wobei die Werte des ersten Kennungsinformationsfelds erste Werte sind und/oder die Werte des zweiten Kennungsinformationsfelds zweite Werte sind, die ausdrücken, dass ein Endgerät dafür ausgelegt ist, die Funktion einer schnellen Anfangs-Übertragungsstreckeneinrichtung zu unterstützen; und/oder
Empfangen eines Bakenrahmens, wobei
ein Header eines physischen Rahmens des Bakenrahmens ein erstes Kennungsinformationsfeld umfasst und die Dienstdateneinheit eines Anpassungsprotokolls einer physischen Schicht des Bakenrahmen ein zweites Kennungsinformationsfeld umfasst, und
die Werte des ersten Kennungsinformationsfelds im Header der physischen Schicht des Bakenrahmens erste Werte sind und/oder die Werte des zweiten Kennungsinformationsfelds in der Dienstdateneinheit eines Anpassungsprotokolls einer physischen Schicht zweite Werte sind, die angeben, dass ein Zugriffspunkt (AP) dafür ausgelegt ist, die Funktion der schnellen Anfangs-Übertragungsstreckeneinrichtung zu unterstützen, wobei
die Dienstdateneinheit eines Anpassungsprotokolls einer physischen Schicht eine Medienzugriffssteuerprotokoll-Dateneinheit umfasst, die ein Medienzugriffssteuerrahmen ist, der einen Medienzugriffssteuerrahmen-Header und einen Medienzugriffssteuerrahmen-Body umfasst;
das erste Kennungsinformationsfeld ein oder mehrere Bits in einer Signaldomäne des Headers der physischen Schicht des Bakenrahmens und/oder der ersten Mitteilung über eine Anfangs-Übertragungsstreckeneinrichtung umfasst;
das zweite Kennungsinformationsfeld ein oder mehrere Bits im Medienzugriffssteuerrahmen des Bakenrahmens und/oder in der ersten Mitteilung über eine Anfangs-Übertragungsstreckeneinrichtung umfasst;
das zweite Kennungsinformationsfeld ein oder mehrere Bits in einer Tauglichkeitsinformationsdomäne des Medienzugriffssteuerrahmen-Bodys des Bakenrahmens und/oder der ersten Mitteilung über eine Anfangs-Übertragungsstreckeneinrichtung umfasst.

11. Kommunikationsverfahren mit schneller Anfangs-Übertragungsstreckeneinrichtung nach Anspruch 10, wobei
die erste Mitteilung über eine Anfangs-Übertragungsstreckeneinrichtung einen Sondierungsanforderungsrahmen und/oder einen Zuordnungsanforderungsrahmen umfasst;
der Header des physischen Rahmens des Bakenrahmens und/oder der ersten Mitteilung über eine Anfangs-Übertragungsstreckeneinrichtung das erste Kennungsinformationsfeld umfasst bzw. umfassen und/oder die Dienstdateneinheit eines Anpassungsprotokolls einer physischen Schicht das zweite Kennungsinformationsfeld umfasst, wobei die Werte des ersten Kennungsinformationsfelds zweite Werte sind und/oder die Werte des zweiten Kennungsinformationsfelds erste Werte sind, die ausdrücken, dass das Endgerät und/oder der Zugriffspunkt (AP) die herkömmliche Funktion einer Anfangs-Übertragungsstreckeneinrichtung unterstützt bzw. unterstützen;
wobei das Kommunikationsverfahren mit schneller Anfangs-Übertragungsstreckeneinrichtung ferner umfasst:
wenn sowohl das Endgerät als auch der Zugriffspunkt (AP) die Funktion einer schnellen Anfangs-Übertragungsstreckeneinrichtung unterstützen, richten das Dienstverarbeitungsmodul (202) und der Zugriffspunkt (AP) eine Anfangs-Übertragungsstrecke in einem vorgegebenen Modus einer schnellen Anfangs-Übertragungsstreckeneinrichtung ein; und/oder
wenn weder das Endgerät noch der Zugriffspunkt (AP) die Funktion einer schnellen Anfangs-Übertragungsstreckeneinrichtung unterstützen, richten das Endgerät und der Zugriffspunkt (AP) die Anfangs-Übertragungsstrecke im herkömmlichen Anfangs-Übertragungsstreckeneinrichtungsmodus ein; und/oder
wenn das Endgerät die Funktion einer schnellen Anfangs-Übertragungsstreckeneinrichtung unterstützt und der Zugriffspunkt (AP) die Funktion einer schnellen Anfangs-Übertragungsstreckeneinrichtung nicht unterstützt, richten das Endgerät und der Zugriffspunkt (AP) eine Anfangs-Übertragungsstrecke im herkömmlichen Anfangs-Übertragungsstreckeneinrichtungsmodus ein; und/oder
wenn das Endgerät die Funktion einer schnellen Anfangs-Übertragungsstreckeneinrichtung nicht unterstützt und der Zugriffspunkt (AP) die Funktion einer schnellen Anfangs-Übertragungsstreckeneinrichtung unterstützt, richten das Endgerät und der Zugriffspunkt (AP) eine Anfangs-Übertragungsstrecke im herkömmlichen Anfangs-Übertragungsstreckeneinrichtungsmodus ein.

## Revendications

1. Dispositif de communication d'une configuration de liaison initiale rapide (200) comprenant :
un module de traitement de services (202) adapté pour générer une trame balise comprenant une unité de données de service du protocole de convergence de couche physique, où
une en-tête de trame physique de la trame balise comprend un premier champ d'information d'identifieur et l'unité de données de service du protocole de convergence de couche physique de la trame balise comprend un second champ d'information d'identifieur, et
les valeurs du premier champ d'information d'identifieur qui sont des premières valeurs et/ou les valeurs du second champ d'information d'identifieur qui sont des secondes valeurs indiquent que le module de traitement de services (202) est adapté pour apporter une assistance à la fonction de configuration de liaison initiale rapide, et est
adapté pour transmettre la trame balise par le biais d'un module émetteur-récepteur (204) sans fil ; et/ou est adapté
pour recevoir un premier message de configuration de liaison initiale par le biais du module émetteur-récepteur (204) sans fil, où
une en-tête de trame physique du premier message de configuration de liaison initiale comprend un premier champ d'information d'identifieur et l'unité de données de services du protocole de convergence de couche physique du premier message de configuration de liaison initiale comprend un second champ d'information d'identifieur, et
les valeurs du premier champ d'information dans l'en-tête de trame physique du premier message de configuration de liaison initiale qui représentent les premières valeurs et/ou les valeurs du second champ d'information d'identifieur dans l'unité de données de services du protocole de convergence de couche physique du premier message de configuration de liaison initiale qui représentent les secondes valeurs indiquent qu'un terminal est adapté pour la fonction de configuration de liaison initiale rapide ;
le module émetteur-récepteur (204) sans fil est adapté pour l'échange de données avec l'extérieur dudit dispositif de communication de configuration de liaison initiale rapide (200) ;
l'unité de données de services du protocole de convergence de couche physique comprend une unité de données du protocole de commande d'accès au média qui est une trame de commande d'accès au média incluant une en-tête de trame de commande d'accès au média et un corps de trame de commande d'accès au média ;
le premier champ d'information d'identifieur comprend un ou plusieurs bits dans un domaine de signal d'une en-tête de trame physique de la trame balise et/ou de premier message de configuration de liaison initiale ; et
le second champ d'information d'identifieur comprend un ou plusieurs bits dans la trame de commande d'accès au média de la trame balise et/ou de premier message de configuration de liaison initiale ;
le second champ d'information d'identifieur comprend un ou plusieurs bits dans un domaine d'information de capacité du corps de trame de commande d'accès au média de la trame balise et/ou du premier message de configuration de liaison initiale.

2. Dispositif de communication d'une configuration de liaison initiale rapide (200) selon la revendication 1, dans lequel
le premier message de configuration de liaison initiale comprend une trame de requête d'échantillon et/ou une trame de requête d'association ;
l'en-tête de trame physique de la trame balise et/ou du premier message de configuration de liaison initiale comprennent le premier champ d'information d'identifieur et/ou l'unité de données de services du protocole de convergence de couche physique comprend le second champ d'information d'identifieur, les valeurs du premier champ d'information d'identifieur qui sont les secondes valeurs et/ou les valeurs du second champ d'information d'identifieur qui sont les premières valeurs expriment que le module de traitement des services (202) et/ou le terminal apportent une assistance à la fonction de configuration de liaison initiale traditionnelle.

3. Dispositif de communication d'une configuration de liaison initiale rapide (200) selon l'une quelconque des revendications 1 à 2, dans lequel
lorsque à la fois le module de traitement de services (202) et le terminal apportent une assistance à la fonction de configuration de liaison initiale rapide, le module de traitement des services (202) et le terminal configurent une liaison initiale dans un mode spécifié de configuration de liaison initiale rapide ; et/ou
lorsque à la fois le module de traitement de services (202) et le terminal n'apportent pas d'assistance à la fonction de configuration de liaison initiale rapide, le module de traitement des services (202) et le terminal configurent une liaison initiale dans le mode de configuration de liaison initiale traditionnel ; et/ou
lorsque le module de traitement des services (202) apporte une assistance à la fonction de configuration de liaison initiale et le terminal n'apporte pas d'assistance à la fonction de configuration de liaison initiale rapide, le module de traitement de services (202) et le terminal configurent une liaison initiale dans le mode de configuration de liaison initiale traditionnel ; et/ou
lorsque le module de traitement de services (202) n'apporte pas d'assistance à la fonction de configuration de liaison initiale et le terminal apporte une assistance à la fonction de configuration de liaison initiale rapide, le module de traitement de services (202) et le terminal configurent une liaison initiale dans le mode de configuration de liaison initiale traditionnel.

4. Procédé de communication de configuration de liaison initiale rapide, comprenant :
la génération d'une trame balise comprenant une unité de données de service du protocole de convergence de couche physique, où une en-tête de trame physique de la trame balise comprend un premier champ d'information d'identifieur et l'unité de données de service du protocole de convergence de couche physique de la trame balise comprend un second champ d'information d'identifieur, et les valeurs du premier champ d'information d'identifieur qui sont des premières valeurs et/ou les valeurs du second champ d'information d'identifieur qui sont des secondes valeurs indiquent qu'un point d'accès (AP) est adapté pour apporter une assistance à la fonction de configuration de liaison initiale rapide ; pour la transmission de la trame balise ;
et/ou
pour la réception d'un premier message de configuration de liaison initiale, où
une en-tête de trame physique du premier message de configuration de liaison initiale comprend un premier champ d'information d'identifieur et l'unité de données de services du protocole de convergence de couche physique du premier message de configuration de liaison initiale comprend un second champ d'information d'identifieur, et
les valeurs du premier champ d'information dans l'en-tête de trame physique du premier message de configuration de liaison initiale qui représentent les premières valeurs et/ou les valeurs du second champ d'information d'identifieur dans l'unité de données de services du protocole de convergence de couche physique du premier message de configuration de liaison initiale qui représentent les secondes valeurs indiquent qu'un terminal est adapté pour apporter une assistance à la fonction de configuration de liaison initiale rapide, où
l'unité de données de services du protocole de convergence de couche physique comprend une unité de données du protocole de commande d'accès au média qui est une trame de commande d'accès au média incluant une en-tête de trame de commande d'accès au média et un corps de trame de commande d'accès au média ;
le premier champ d'information d'identifieur comprend un ou plusieurs bits dans un domaine de signal d'une en-tête de trame physique de la trame balise et/ou du premier message de configuration de liaison initiale ; et
le second champ d'information d'identifieur comprend un ou plusieurs bits dans la trame de commande d'accès au média de la trame balise et/ou du premier message de configuration de liaison initiale ; et
le second champ d'information d'identifieur comprend un ou plusieurs bits dans un domaine d'information de capacité du corps de trame de commande d'accès au média de la trame balise et/ou du premier message de configuration de liaison initiale.

5. Procédé de communication de configuration de liaison initiale rapide selon la revendication 4, dans lequel
le premier message de configuration de liaison initiale comprend une trame de requête d'échantillon et/ou une trame de requête d'association ;
l'en-tête de trame physique de la trame balise et/ou du premier message de configuration de liaison initiale comprennent le premier champ d'information d'identifieur et/ou l'unité de données de services du protocole de convergence de couche physique comprend le second champ d'information d'identifieur, les valeurs du premier champ d'information d'identifieur qui sont les secondes valeurs et/ou les valeurs du second champ d'information d'identifieur qui sont les premières valeurs expriment que le point d'accès (AP) et/ou le terminal apportent une assistance à la fonction de configuration de liaison initiale traditionnelle.

6. Procédé de communication de configuration de liaison initiale rapide selon l'une quelconque des revendications 4 à 5, comprenant en outre :
lorsque à la fois le point d'accès (AP) et le terminal apportent une assistance à la fonction de configuration de liaison initiale rapide, le point d'accès (AP) et le terminal configurent une liaison initiale dans un mode spécifié de configuration de liaison initiale rapide ; et/ou
lorsque à la fois le point d'accès (AP) et le terminal n'apportent pas d'assistance à la fonction de configuration de liaison initiale rapide, le point d'accès (AP) et le terminal configurent une liaison initiale dans le mode de configuration de liaison initiale traditionnel ; et/ou
lorsque le point d'accès (AP) apporte une assistance à la fonction de configuration de liaison initiale et le terminal n'apporte pas d'assistance à la fonction de configuration de liaison initiale rapide, le point d'accès (AP) et le terminal configurent une liaison initiale dans le mode de configuration de liaison initiale traditionnel ; et/ou
lorsque le point d'accès (AP) n'apporte pas d'assistance à la fonction de configuration de liaison initiale et le terminal apporte une assistance à la fonction de configuration de liaison initiale rapide, le point d'accès (AP) et le terminal configurent une liaison initiale dans le mode de configuration de liaison initiale traditionnel.

7. Dispositif de communication d'une configuration de liaison initiale rapide (200) comprenant :
un module de traitement de services (202) adapté pour générer un premier message de configuration de liaison initiale comprenant l'unité de données de service du protocole de convergence de couche physique, où
une en-tête de trame physique du premier message de configuration de liaison initiale comprend un premier champ d'information d'identifieur et l'unité de données de service du protocole de convergence de couche physique du premier message de configuration de liaison initiale comprend un second champ d'information d'identifieur, et
les valeurs du premier champ d'information d'identifieur qui sont des premières valeurs et/ou les valeurs du second champ d'information d'identifieur qui sont des secondes valeurs indiquent que le module de traitement de services (202) est adapté pour la fonction de configuration de liaison initiale rapide, et est
adapté pour la transmission du premier message de configuration de liaison initiale par le biais d'un module émetteur-récepteur (204) sans fil ; et/ou est
adapté pour la réception d'une trame balise par le biais du module émetteur-récepteur (204) sans fil, où
une en-tête de trame physique de la trame balise comprend un premier champ d'information d'identifieur et l'unité de données de services du protocole de convergence de couche physique de la trame balise comprend un second champ d'information d'identifieur, et
les valeurs du premier champ d'information dans l'en-tête de trame physique de la trame balise qui représentent les premières valeurs et/ou les valeurs du second champ d'information d'identifieur dans l'unité de données de services du protocole de convergence de couche physique qui représentent les secondes valeurs indiquent qu'un point d'accès (AP) est adapté pour apporter une assistance à la fonction de configuration de liaison initiale rapide FILS ;
le module émetteur-récepteur (204) sans fil est adapté pour échanger des données avec l'extérieur dudit dispositif de communication d'une configuration de liaison initiale rapide (200) ;
l'unité de données de services du protocole de convergence de couche physique comprend une unité de données du protocole de commande d'accès au média qui est une trame de commande d'accès au média incluant une en-tête de trame de commande d'accès au média et un corps de trame de commande d'accès au média ;
le premier champ d'information d'identifieur comprend un ou plusieurs bits dans un domaine de signal d'une en-tête de trame physique de la trame balise et/ou du premier message de configuration de liaison initiale ;
le second champ d'information d'identifieur comprend un ou plusieurs bits dans la trame de commande d'accès au média de la trame balise et/ou du premier message de configuration de liaison initiale ; et
le second champ d'information d'identifieur comprend un ou plusieurs bits dans un domaine d'information de capacité du corps de trame de commande d'accès au média de la trame balise et/ou du premier message de configuration de liaison initiale.

8. Dispositif de communication d'une configuration de liaison initiale rapide (200) selon la revendication 7, dans lequel
le premier message de configuration de liaison initiale comprend une trame de requête d'échantillon et/ou une trame de requête d'association ;
l'en-tête de trame physique de la trame balise et/ou du premier message de configuration de liaison initiale comprennent le premier champ d'information d'identifieur et/ou l'unité de données de services du protocole de convergence de couche physique comprend le second champ d'information d'identifieur, les valeurs du premier champ d'information d'identifieur qui sont les secondes valeurs et/ou les valeurs du second champ d'information d'identifieur qui sont les premières valeurs expriment que le module de traitement de services (202) et/ou le point d'accès (AP) apportent une assistance à la fonction de configuration de liaison initiale traditionnelle.

9. Dispositif de communication d'une configuration de liaison initiale rapide (200) selon la revendication 7, dans lequel
lorsque à la fois le module de traitement de services (202) et le point d'accès (AP) apportent une assistance à la fonction de configuration de liaison initiale rapide, le module de traitement de services (202) et le point d'accès (AP) configurent une liaison initiale dans un mode spécifié de configuration de liaison initiale rapide ; et/ou
lorsque à la fois le module de traitement de services (202) et le point d'accès (AP) n'apportent pas d'assistance à la fonction de configuration de liaison initiale rapide, le module de traitement de services (202) et le point d'accès (AP) configurent une liaison initiale dans le mode de configuration de liaison initiale traditionnel ; et/ou
lorsque le module de traitement de services (202) apporte une assistance à la fonction de configuration de liaison initiale et le point d'accès (AP) n'apporte pas d'assistance à la fonction de configuration de liaison initiale rapide, le module de traitement de services (202) et le point d'accès (AP) configurent une liaison initiale dans un mode de configuration de liaison initiale traditionnel ; et/ou
lorsque le module de traitement de services (202) n'apporte pas d'assistance à la fonction de configuration de liaison initiale rapide, et le point d'accès (AP) apporte une assistance à la configuration de liaison initiale rapide, le module de traitement de services (202) et le point d'accès (AP) configurent une liaison initiale dans le mode de configuration de liaison initiale traditionnel.

10. Procédé de communication d'une configuration de liaison initiale rapide comprenant :
la génération d'un premier message de configuration de liaison initiale comprenant l'unité de données de service du protocole de convergence de couche physique, où
une en-tête de trame physique du premier message de configuration de liaison initiale comprend un premier champ d'information d'identifieur et l'unité de données de service du protocole de convergence de couche physique du premier message de configuration de liaison initiale comprend un second champ d'information d'identifieur, et les valeurs du premier champ d'information d'identifieur qui sont des premières valeurs et/ou les valeurs du second champ d'information d'identifieur qui sont des secondes valeurs indiquent qu'un terminal est adapté pour apporter une assistance à la fonction de configuration de liaison initiale rapide ; pour la transmission du premier message de configuration de liaison initiale ; et/ou
la réception d'une trame balise, où
une en-tête de trame physique de la trame balise comprend un premier champ d'information d'identifieur et l'unité de données de services du protocole de convergence de couche physique de la trame balise comprend un second champ d'information d'identifieur, et
les valeurs du premier champ d'information dans l'en-tête de trame physique de la trame balise qui représentent les premières valeurs et/ou les valeurs du second champ d'information d'identifieur dans l'unité de données de services du protocole de convergence de couche physique qui représentent les secondes valeurs indiquent qu'un point d'accès (AP) est adapté pour apporter une assistance à la fonction de configuration de liaison initiale rapide, où
l'unité de données de services du protocole de convergence de couche physique comprend une unité de données du protocole de commande d'accès au média qui est une trame de commande d'accès au média incluant une en-tête de trame de commande d'accès au média et un corps de trame de commande d'accès au média ;
le premier champ d'information d'identifieur comprend un ou plusieurs bits dans un domaine de signal d'une en-tête de trame physique de la trame balise et/ou du premier message de configuration de liaison initiale ;
le second champ d'information d'identifieur comprend un ou plusieurs bits dans la trame de commande d'accès au média de la trame balise et/ou du premier message de configuration de liaison initiale ;
le second champ d'information d'identifieur comprend un ou plusieurs bits dans un domaine d'information de capacité du corps de trame de commande d'accès au média de la trame balise et/ou du premier message de configuration de liaison initiale.

11. Procédé de communication d'une configuration de liaison initiale rapide selon la revendication 10, dans lequel
le premier message de configuration de liaison initiale comprend une trame de requête d'échantillon et/ou une trame de requête d'association ;
l'en-tête de trame physique de la trame balise et/ou du premier message de configuration de liaison initiale comprennent le premier champ d'information d'identifieur et/ou l'unité de données de services du protocole de convergence de couche physique comprend le second champ d'information d'identifieur, les valeurs du premier champ d'information d'identifieur qui sont les secondes valeurs et/ou les valeurs du second champ d'information d'identifieur qui sont les premières valeurs expriment que le terminal et/ou le point d'accès (AP) apportent une assistance à la fonction de configuration de liaison initiale traditionnelle ;
le procédé de communication de configuration de liaison initiale rapide comprend en outre :
lorsque à la fois le terminal et le point d'accès (AP) apportent une assistance à la fonction de configuration de liaison initiale rapide, le terminal et le point d'accès (AP) configurent une liaison initiale dans un mode spécifié de configuration de liaison initiale rapide ; et/ou
lorsque à la fois le terminal et le point d'accès (AP) n'apportent pas d'assistance à la fonction de configuration de liaison initiale rapide, le terminal et le point d'accès (AP) configurent une liaison initiale dans le mode de configuration de liaison initiale traditionnel ; et/ou
lorsque le terminal apporte une assistance à la fonction de configuration de liaison initiale et le point d'accès (AP) n'apporte pas d'assistance à la fonction de configuration de liaison initiale rapide, le terminal et le point d'accès (AP) configurent une liaison initiale dans le mode de configuration de liaison initiale traditionnel ; et/ou
lorsque le terminal n'apporte pas d'assistance à la fonction de configuration de liaison initiale rapide, et le point d'accès (AP) apporte une assistance à la configuration de liaison initiale rapide, le terminal et le point d'accès (AP) configurent une liaison initiale dans le mode de configuration de liaison initiale traditionnel.
